# EUROPÄISCHE PATENTSCHRIFT

(11) **EP 4 094 982 B1**
(45) Veröffentlichungstag und Bekanntmachung des Hinweises auf die Patenterteilung: **07.10.2026**
(21) Anmeldenummer: 22186041.4
(22) Anmeldetag: 06.04.2021
(51) Int. Cl.: B60P 1/44, B60Q 1/30

(54) **HUBLADEBÜHNE FÜR FAHRZEUGE**
CANTILEVER LIFT FOR VEHICLES
PLATEFORME ÉLÉVATRICE DE CHARGEMENT POUR VÉHICULES

(30) Priorität: 08.04.2020 DE 102020109849
(43) Veröffentlichungstag der Anmeldung: 30.11.2022
(62) Dokumentnummer(n) der früheren Anmeldung(en) nach Art. 76 EPÜ: 21166878.5 / 3 892 495
(73) Patentinhaber: Bär Management- und Beteiligungsgesellschaft mbH, 74078 Heilbronn (DE)
(72) Erfinder: Förch, Peter, 67435 Neustadt an der Weinstraße (DE)
(74) Vertreter: DREISS Patentanwälte PartG mbB

(56) Entgegenhaltungen:
- EP-A1- 1 837 235
- EP-B1- 1 610 158
- DE-A1- 102008 030 746
- DE-A1- 102015 225 054
- DE-A1- 19 517 827
- DE-A1- 4 311 359
- DE-B4- 102015 225 054
- DE-U1- 202006 004 612
- DE-U1- 29 808 424

## Beschreibung

Die Erfindung betrifft eine Hubladebühne mit einer heb- und senkbaren Plattform. Der Begriff "Hubladebühne" soll hierbei an sich eine beliebige gattungsgemäße Vorrichtung zum Heben und Senken einer Plattform an einem Kraftfahrzeug, beispielsweise an einem Lastkraftwagen, bezeichnen.

EP 1610158 A1 offenbart eine Beleuchtungs- und/oder Signalvorrichtung für ein Kraftfahrzeug.

Mit DE 20 2006 004 612 U1 wurde eine Lichtsignaleinrichtung für eine Hubladebühne vorgeschlagen, die aus einer oder mehreren Leuchtmitteln besteht die in entsprechenden Ausnehmungen in einem Teilbereich einer seitlichen Randfläche einer Ladeplattform der Hubladebühne angeordnet sind. Diese Anordnung sieht Lichtaustrittsöffnungen vor durch die Licht vom Leuchtmittel in einem Lichtstrahl oder Lichtkegel austritt. Die Lichtaustrittsöffnungen sind aufwendig zu fertigen und lassen die seitliche Randfläche punktuell hell erscheinen.

Aus DE 10 2015 225 054 A1 ist eine vorteilhafte Lichtumrandung für derartige Hubladebühne bekannt.

Der vorliegenden Erfindung liegt die Aufgabe zugrunde, diese weiter zu verbessern.

Diese Aufgabe wird erfindungsgemäß gelöst durch eine Hubladebühne gemäß Anspruch 1.

Dadurch ist eine nach hinten sichtbare homogene Beleuchtung erzeugbar. Das Lichtauskoppelmittel stellt eine passive Komponente dar, die besonders robust gegenüber mechanischen Beanspruchungen und Witterungsbedingten Einflüssen ist. Die Hubladebühne ist daher besonders alltagstauglich und einfach zu fertigen. Zudem ergibt sich ein ansprechendes homogenes Erscheinungsbild im beleuchteten Zustand.

Vorzugsweise sind Mittel vorgesehen, die dazu ausgebildet sind, Licht für eine Ausbreitung des Lichts im Wesentlichen in der Querrichtung in das Lichtauskoppelmittel einzukoppeln, oder dass Mittel vorgesehen sind, insbesondere ein in die Nut oder den Winkel integriertes Leuchtmittel, die dazu ausgebildet sind, das Licht an wenigstens einem Abschnitt einer Umfangsfläche des Lichtauskoppelmittels einzukoppeln. Unabhängig davon, wo das Mittel am Lichtauskoppelmittel angeordnet ist, breiten sich Lichtstrahlen des eingekoppelten Lichtes entweder vorrangig in der Querrichtung des Lichtauskoppelmittels oder von unten aus. Über die Länge des Lichtauskoppelmittels wird dadurch eine hohe Beleuchtungsstärke des ausgekoppelten Lichtes erreicht.

Gemäß der Erfindung ist ein Leuchtmittel vorgesehen, wobei das Leuchtmittel ausgebildet ist, Licht aus dem Leuchtmittel im Wesentlichen in der Querrichtung gerichtet in das Lichtauskoppelmittel einzukoppeln.

Das Mittel kann eine Linse umfassen, die Linse derart angeordnet und ausgebildet ist, dass durch das Leuchtmittel erzeugte, sich divergierend ausbreitende Lichtstrahlen, die auf die Linse treffen, gebündelt werden, so dass diese hinter der Linse im Wesentlichen parallel in der Querrichtung verlaufen. Diese im Wesentlichen parallel verlaufenden Lichtstrahlen werden in das Lichtauskoppelmittel eingekoppelt. Dadurch wird eine hohe Lichtstärke erreicht.

Besonders vorteilhaft ist es, wenn an wenigstens einer Stirnseite des Lichtauskoppelmittels ein Leuchtmittel angeordnet ist. Größere Bereiche des Längsaußenrandes können durch eine Beleuchtung von einer der Stirnseiten her besonders einfach beleuchtet werden.

Gemäß der Erfindung ist auf beiden Stirnseiten des Lichtauskoppelmittels ein Leuchtmittel zum Einkoppeln von Licht in das Lichtauskoppelmittel angeordnet. Durch das Auskoppeln von Licht nimmt eine Intensität des Lichts mit dem Abstand vom Leichtmittel ab. Durch das Einkoppeln von zwei einander gegenüberliegenden Stirnseiten des Lichtauskoppelmittels wird ausreichend Licht eingekoppelt, so dass für sehr lange Außenränder über die gesamte Länge des Lichtauskoppelmittels ein homogenes Erscheinungsbild erreicht wird.

In einem erfindungsgemäßen Aspekt ist vorgesehen, dass das Leuchtmittel ausgebildet ist, Licht aus dem Leuchtmittel in einem Winkel insbesondere zwischen 5° und 90° zur Querrichtung gerichtet in das Lichtauskoppelmittel einzukoppeln, wobei eine zumindest teilweise im Lichtauskoppelmittel angeordnete Umlenkoptik ausgebildet ist, das Licht für eine Ausbreitung des Lichts im Wesentlichen in der Querrichtung zumindest teilweise zu reflektieren.

In einem Aspekt umfasst das Mittel einen Lichtwellenleiter, der zwischen dem Leuchtmittel und dem Lichtauskoppelmittel angeordnet ist.

Besonders vorteilhaft ist es, wenn sich die Nut oder der Winkel an dem Außenrand kontinuierlich erstreckt. Dadurch kann sich das in der Querrichtung erstreckende Lichtauskoppelmittel ebenfalls kontinuierlich in der Nut oder im Winkel erstrecken.

Besonders vorteilhaft ist es, wenn die Nut oder der Winkel zur Außenseite der Hubladebühne hin durchgehend offen ist. Ein stabförmiges Lichtauskoppelmittel kann wird somit einfach in die Nut eingeschoben oder am Winkel angeordnet werden.

Besonders vorteilhaft ist es, wenn sich das in der Nut oder im Winkel angeordnete Lichtauskoppelmittel in der Querrichtung kontinuierlich erstreckt. Durch ein sich in der Querrichtung kontinuierlich erstreckendes Lichtauskoppelmittel ist das homogene Erscheinungsbild besonders einfach erzielbar.

Besonders vorteilhaft ist es, wenn die Nut oder der Winkel einen sich in der Querrichtung erstreckenden Abschnitt mit einem Innenprofil, insbesondere einem Innenradius aufweist, der dem Außenprofil, insbesondere dem Außenradius des Lichtauskoppelmittels entspricht. Die Nut oder der Winkel nehmen das Lichtauskoppelmittel dadurch passgenau auf.

Besonders vorteilhaft ist es, wenn der Winkel oder die Nut als optisches Element zur Reflexion von aus dem Lichtauskoppelmittel austretendem Licht ausgebildet sind. Das Lichtauskoppelmittel ist aus transparentem oder semitransparentem Material. Das an dem Winkel oder der Nut reflektierte Licht durchdringt das Lichtauskoppelmittel und verstärkt die Intensität der Beleuchtung auf der offenen Seite der Nut oder des Winkels.

Besonders vorteilhaft ist es, wenn die Nut oder der Winkel quer zur Querrichtung ein Querprofil aufweist, das in der Querrichtung einen durchgehend gleichen Lichtaustrittswinkel für aus dem Lichtauskoppelmittel austretendes Licht festlegt. Dadurch wird für unterschiedliche Betrachtungswinkel einfach ein homogenes Erscheinungsbild erzielt.

Besonders vorteilhaft ist es, wenn die Nut oder der Winkel mindestens abschnittsweise zu mindestens einer weiteren Außenseite der Hubladebühne offen ist, wobei die Nut oder der Winkel so angeordnet ist, dass aus dem Lichtauskoppelmittel austretendes Licht mindestens eine weitere Außenseite der Hubladebühne homogen oder abschnittsweise hell erscheinen lässt. Dadurch kann das Erscheinungsbild der Oberseite oder die Unterseite der Hubladebühne mit demselben Leuchtmittel und/oder Lichtauskoppelmittel beeinflusst werden.

Besonders vorteilhaft ist es, wenn das Lichtauskoppelmittel Streupartikel aufweist, die in einem Lichtleitelement, insbesondere einem Kunststoff, einem Polymethylmethacrylat oder Quarzglas angeordnet sind. Kunststoff, Polymethylmethacrylat oder Quarzglas eignen sich besonders für das Leiten von Licht. Die Streupartikel koppeln im Verlauf des Lichtauskoppelmittels nach und nach Licht in gewünschter Intensität aus. Lichtauskoppelmittel sind besonders gut zur Erzeugung des homogenen Erscheinungsbildes geeignet.

Besonders vorteilhaft ist es, wenn die Nut oder der Winkel sowie das Lichtauskoppelmittel sich zumindest abschnittsweise entlang eines Außenrands eines Spitzenprofils oder eines Außenrands der Plattform erstreckt. Dadurch erscheint das Spitzenprofil bzw. der Queraußenrand der Plattform ebenfalls zumindest abschnittsweise homogen hell, wenn Licht aus dem Lichtauskoppelmittel austritt.

Vorzugsweise erstreckt sich ein erstes insbesondere mehrteiliges Lichtauskoppelmittel entlang eines ersten Außenrands des Spitzenprofils, wobei sich ein zweites insbesondere einteiliges Lichtauskoppelmittel entlang eines zweiten Außenrands des Spitzenprofils erstreckt.

Das Spitzenprofil kann eine Ladekante mit einer Öffnung aufweisen, wobei die Ladekante im Bereich der Öffnung auf beiden Seiten der Öffnung Profilflächen aufweist, die sich im Wesentlichen parallel zur Ladekante erstrecken und gegeneinander um einen Winkel insbesondere zwischen 25° und 35° vorzugsweise von 30° oder bezüglich einer optischen Achse um einen Winkel insbesondere zwischen 20° und - 20° vorzugsweise von +15° oder -15° geneigt sind

Die Ladekante kann bezüglich der optischen Achse geneigte Profilflächen aufweisen, die die Öffnung einschließen, wobei eine der Profilflächen mit einem Winkel insbesondere zwischen 40° und 50° bevorzugt 45° bezüglich der optischen Achse geneigt ist, wobei die andere Profilfläche mit einem Winkel insbesondere zwischen 75° und 85° vorzugsweise 80° bezüglich der optischen Achse geneigt ist.

Besonders vorteilhaft ist es, wenn das wenigstens eine Leuchtmittel ausgebildet ist zu blinken oder dass wenigstens zwei Leuchtmittel für das Lichtauskoppelmittel ausgebildet sind, im Wesentlichen synchron zu blinken. Dadurch wird mit dem Leuchtmittel oder mit den Leuchtmitteln auch eine Signalisierung ermöglicht.

Besonders vorteilhaft ist es, wenn an einer Stirnseite des Lichtauskoppelmittels ein Leuchtmittel angeordnet ist und an einer dieser Stirnseite gegenüberliegenden Stirnseite des Lichtauskoppelmittels ein Sensor angeordnet ist, wobei der Sensor ausgebildet ist, eine Intensität von Licht zu erfassen, das den Sensor durch das Lichtauskoppelmittel erreicht.

Besonders vorteilhaft ist es, wenn eine Steuerung vorgesehen ist, die ausgebildet ist, eine Schwenkposition der Plattform zu erkennen und das Leuchtmittel in einem ersten Betriebsmodus zu betreiben, in dem das Leuchtmittel zeitlich kontinuierlich leuchtet, wenn eine erste Schwenkposition erkannt wird, und in einem zweiten Betriebsmodus zu betreiben, in dem das Leuchtmittel blinkt, wenn eine zweite Schwenkposition erkannt.

Dadurch wird die Hubladebühne, insbesondere auch ein Fahrzeug, das über eine derartige Hubladebühne verfügt, im Betrieb der Hubladebühne und wenn die Plattform in der Fahrposition ist besonders gut wahrgenommen, wenn Licht aus dem Leuchtmittel austritt.

Weitere Merkmale, Vorteile und Einzelheiten der Erfindung ergeben sich aus den beigefügten Patentansprüchen und aus der zeichnerischen Darstellung und nachfolgenden Beschreibung bevorzugter Ausführungsformen der Erfindung.

In der Zeichnung zeigt:
Figur 1 eine perspektivische Ansicht einer ersten erfindungsgemäßen Plattform;
Figur 2 eine perspektivische Ansicht einer zweiten erfindungsgemäßen Plattform;
Figur 3 eine Seitenansicht einer ersten Ausgestaltung der erfindungsgemäßen Plattform in Richtung des Pfeils I oder II;
Figur 4a eine Seitenansicht einer zweiten Ausgestaltung der erfindungsgemäßen Plattform in Richtung des Pfeils I oder II;
Figur 4b eine Seitenansicht einer dritten Ausgestaltung der erfindungsgemäßen Plattform in Richtung des Pfeils I oder II;
Figur 5 eine Seitenansicht einer vierten Ausgestaltung der erfindungsgemäßen Plattform in Richtung des Pfeils I oder II;
Figur 6 eine Seitenansicht einer fünften Ausgestaltung der erfindungsgemäßen Plattform in Richtung des Pfeils II;
Figur 7 eine Draufsicht auf die fünfte Ausgestaltung der erfindungsgemäßen Plattform in Richtung des Pfeils III oder IV;
Figur 8 eine Seitenansicht einer Ausgestaltung eines Spitzenprofils der erfindungsgemäßen Plattform;
Figur 9 zeigt eine Seitenansicht einer weiteren Ausgestaltung eines weiteren Spitzenprofils,
Figur 10 zeigt eine schematische Darstellung einer ersten Beleuchtungsanordnung für die Plattform,
Figur 11 zeigt eine schematische Darstellung einer zweiten Beleuchtungsanordnung für die Plattform,
Figur 12 zeigt eine schematische Darstellung einer dritten Beleuchtungsanordnung für die Plattform,
Figur 13 zeigt eine schematische Darstellung einer vierten Beleuchtungsanordnung für ein Spitzenprofil,
Figur 14 zeigt schematisch eine Anordnung eines Leuchtmittels und einer Umlenkoptik,
Figur 15 zeigt schematisch eine Anordnung eines Leuchtmittels und eines Lichtwellenleiters,
Figur 16 zeigt schematisch eine erste Ansicht einer Anordnung des Lichtauskoppelmittels an einer Ladekante eines Spitzenprofiles,
Figur 17 zeigt schematisch eine zweite Ansicht einer Anordnung des Lichtauskoppelmittels an einer Ladekante eines Spitzenprofiles,
Figur 18 zeigt eine Anordnung mit einer Leuchte im Spitzenprofil,
Figur 19 zeigt eine Anordnung mit zwei äußeren Leuchten und einer dreiteiligen Leuchte im Spitzenprofil,
Figur 20 zeigt schematisch Teile eines Steuergeräts
Figur 21 zeigt Schritte in einem Verfahren.

Dieselben Elemente der Hubladebühne werden in den Figuren durchgehend mit denselben Bezugszeichen bezeichnet.

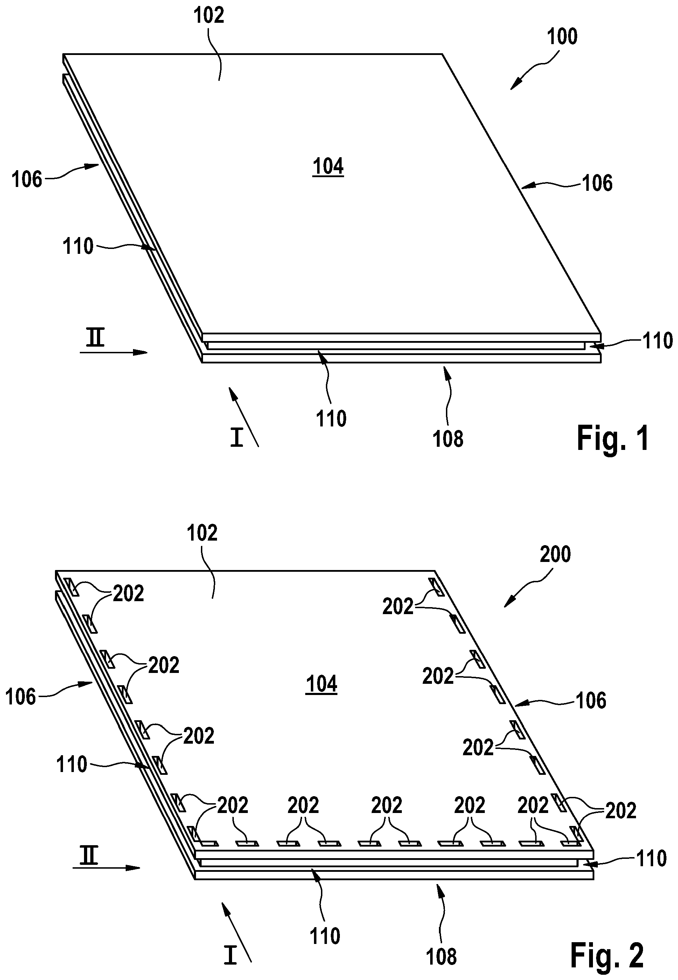

Figur 1 zeigt eine erste perspektivische Ansicht eines Teils einer ersten erfindungsgemäßen Hubladebühne 100. Die erste Hubladebühne 100 weist eine Plattform 102 mit einer Arbeitsfläche 104, je einem Längsaußenrand 106 auf jeder Seite der ersten Hubladebühne 100 und einem Queraußenrand 108 auf, der die Längsaußenränder 106 verbindet. Die erste Hubladebühne 100 weist zudem nicht dargestellte Mittel zur Befestigung der ersten Hubladebühne 100 an einem Fahrzeug auf. Wird die erste Hubladebühne 100 am Heck eines Fahrzeugs befestigt, erstrecken sich die Längsaußenränder 106 parallel zur Fahrzeuglängsachse. Bei Befestigung an der Seite des Fahrzeugs erstreckt sich der Queraußenrand 108 parallel zur Fahrzeugachse.

Zudem weist die Hubladebühne 100 an der Plattform 102 eine der Arbeitsfläche 104 gegenüberliegende Unterseite auf.

Figur 2 zeigt eine zweite perspektivische Ansicht eines Teils einer zweiten erfindungsgemäßen Hubladebühne 200. Die zweite Hubladebühne 200 weist ebenfalls eine Plattform 102 mit einer Arbeitsfläche 104, je einem Längsaußenrand 106 auf jeder Seite der zweiten Hubladebühne 200 und einem Queraußenrand 108 auf, der die Längsaußenränder 106 verbindet. Auch die zweite Hubladebühne 200 weist an der Plattform 102 eine der Arbeitsfläche 104 gegenüberliegende Unterseite und Mittel zur Befestigung an einem Fahrzeug auf.

Die genannten Mittel zur Befestigung sind zum Heben, Senken und/oder Schwenken der Plattform 102 bezüglich des Fahrzeugs ausgebildet.

Im Längsaußenrand 106 und/oder im Queraußenrand 108 erstreckt sich in Längsrichtung bzw. Querrichtung eine Nut 110. Diese ist vorzugsweise kontinuierlich d.h. in Längsrichtung bzw. Querrichtung durchgehend nach der Außenseite der Hubladebühne 100 hin offen. Alternativ kann sowohl im Längsaußenrand 106 als auch im Queraußenrand 108 ein Winkel vorgesehen sein. Diese ist vorzugsweise ebenfalls kontinuierlich das heißt in Längsrichtung bzw. Querrichtung durchgehend nach der Außenseite der Hubladebühne 100 hin offen.

Dies bedeutet, dass sich die Nut 110 oder der Winkel im Längsaußenrand 106 in Längsrichtung erstreckt. Alternativ oder zusätzlich kann sich die Nut 110 oder der Winkel zumindest abschnittsweise im Queraußenrand 108 in Querrichtung erstrecken.

Bevorzugt erstreckt sich die Nut 110 oder der Winkel entlang der gesamten Länge des jeweiligen Randes. Dadurch kann ein Leuchtmittel um mindestens drei Seiten der Plattform 102 umlaufend angeordnet werden. Dadurch wird eine besonders ansprechende Lichtumrandung der Plattform 102 erzielt. Besonders bevorzugt ist es, wenn nur die Längsachsenränder 106 eine Nut 110 oder einen Winkel aufweisen. Es können auch Stege nur an den Verbindungsstellen von Längsaußenrändern 106 mit dem Queraußenrand 108 vorgesehen sein. Diese erhöhen die Stabilität der Plattform 102.

In der Nut 110 oder im Winkel ist ein Lichtauskoppelmittel so angeordnet, dass aus dem Lichtauskoppelmittel austretendes Licht den Längsaußenrand 106 und/oder den Queraußenrand 108 der Plattform homogen hell erscheinen lässt. Vorzugsweise erstreckt sich das Lichtauskoppelmittel in Längsrichtung oder in Querrichtung, insbesondere kontinuierlich in der Nut 110 oder dem Winkel. Besonders bevorzugt ist das Lichtauskoppelmittel umlaufend um mindestens drei Seiten der Arbeitsplattform angeordnet.

Das Konzept der Lichtumrandung kann vorsehen, im Randbereich auf der Plattform 102 kontinuierliche Lichtauskoppelmittel vorzusehen, die bündig in das Randabschlussprofil der Plattform 102 entlang der Längsseite integriert sind.

Im Unterschied zur ersten Hubladebühne 100 weist die zweite Hubladebühne 200 in einem Randbereich der Arbeitsfläche 104 Öffnungen 202 auf, die durch die Arbeitsfläche 104 zur Nut 110 führen. Auf der Oberseite der Plattform 102 können auf der rechten und linken Längsseite der Plattform 102 auch insbesondere stabförmige Lichtauskoppelmittel integriert sein.

Alternativ oder zusätzlich zur Anordnung der Öffnungen 202 auf der Arbeitsfläche 104 können diese auch auf der in Figur 2 nicht dargestellten Unterseite der Plattform 102 angeordnet sein.

Die Nut 110 oder der Winkel sind somit mindestens abschnittsweise zu mindestens einer weiteren Außenseite der Plattform 102 offen. Die Nut 110 oder der Winkel ist so angeordnet, dass aus dem Lichtauskoppelmittel austretendes Licht mindestens eine weitere Außenseite der Hubladebühne 100 homogen oder abschnittsweise hell erscheinen lässt

Die Nut 110 oder der Winkel weisen vorzugsweise einen sich in Längsrichtung bzw. Querrichtung erstreckenden Abschnitt mit einem Innenprofil, insbesondere einem Innenradius auf, der dem Außenprofil, insbesondere dem Außenradius des Lichtauskoppelmittels entspricht.

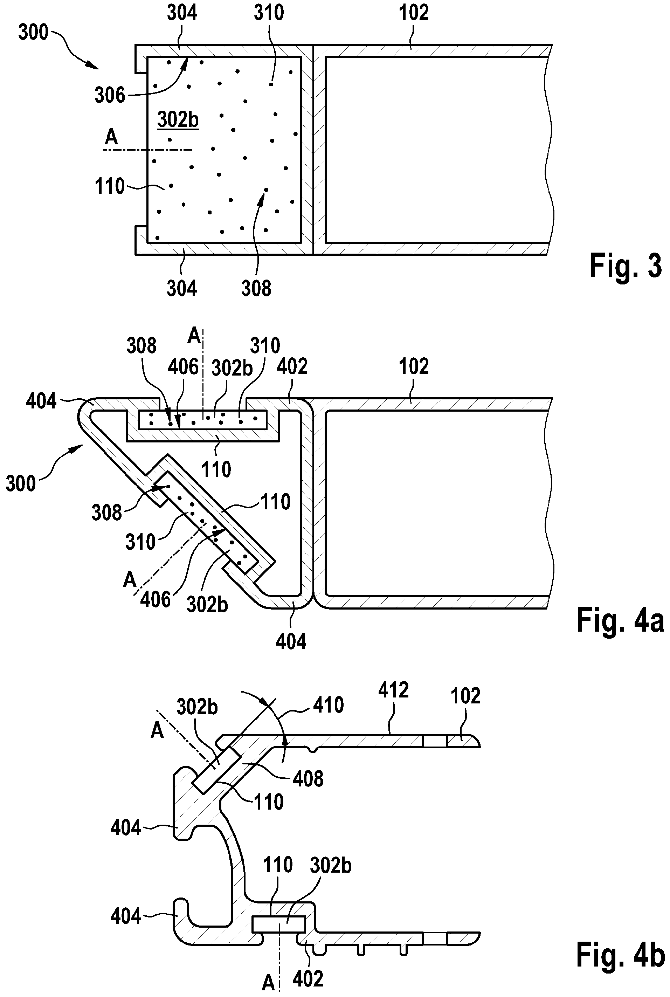

Das Lichtauskoppelmittel ist in Figur 1 und Figur 2 nicht dargestellt. Eine Beleuchtungsanordnung 300, die ein Lichtauskoppelmittel 302b umfasst, wird im Folgenden anhand der Figuren 3 bis 12 beschrieben.

Figuren 3-5 zeigen diesbezüglich Seitenansichten von verschiedenen Ausgestaltungen der erfindungsgemäßen Plattform 102 in Richtung des Pfeils I. oder II.

Figur 3 zeigt die Beleuchtungsanordnung 300 in der ein Lichtauskoppelmittel 302b in der Nut 110 angeordnet ist. Das Lichtauskoppelmittel 302b ist vorzugsweise in der Nut 110 zurückgesetzt an einer dem Lichtauskoppelelement 302b zugewandten Innenseite 306 der Nut 110 angeordnet. Dadurch ragen die freien Enden der Schenkel 304 der Nut 110 über das Lichtauskoppelmittel 302b hinaus und bieten so dem Leuchtmittel 302 Schutz vor mechanischer Beanspruchung.

Das Lichtauskoppelmittel 302b weist Streupartikel 308 auf, die in einem Lichtleitelement 310 angeordnet sind. Das Lichtleitelement 310 umfasst beispielsweise ein Kunststoff, ein Polymethylmethacrylat oder Quarzglas. Vorzugsweise besteht das Lichtleitelement 310 im Wesentlichen aus Kunststoff, ein Polymethylmethacrylat oder Quarzglas in dem die Streupartikel angeordnet sind.

In das Lichtauskoppelmittel 302b wird Licht eingekoppelt. Das Lichtauskoppelmittel 302b das Licht idealerweise dann an der Oberfläche homogen über die gesamte Länge wieder aus. Die Lichteinkopplung erfolgt in einem Aspekt nur stirnseitig mittels einer LED in das Lichtleitelement 310. Das Lichtleitelement 310 ist im Beispiel ein Kunststoffprofil. Die Lichtauskopplung erfolgt idealerweise nur an der einen Längsseite des Kunststoffprofils, an der das Licht an der Plattform 102 sichtbar ist. Für unterschiedlich hohe Plattformen 102 kann eine unterschiedliche Länge des Lichtauskoppelmittels 302 vorgesehen sein, über die das Licht ausgekoppelt werden soll.

Figur 4a zeigt zwei Lichtauskoppelmittel 302b in einem Winkel 402. Der Winkel 402 weist vorzugsweise zwei über die zwei Lichtauskoppelmittel 302b herausragende freie Enden 404 auf. Jeder der beiden Lichtauskoppelmittel 302b ist in diesem Beispiel in einer jeweiligen Nut 110 gehalten.

Die eine der Nuten 110 ist derart geöffnet, dass eine optische Achse A des von dieser Nut 110 gehaltenen Lichtauskoppelmittels 302b senkrecht zur Oberseite der Plattform 102 verläuft. Die andere der Nuten 110 ist derart geöffnet ist, dass eine optische Achse A des Lichtauskoppelmittels 302b schräg zu einer Querrichtung der Plattform 102 und schräg zur Unterseite der Plattform 102 verläuft. Das aus dem Lichtauskoppelmittel austretende Licht lässt zumindest einen Teil des Längsaußenrandes 106 und/oder den Queraußenrand 108 der Plattform homogen hell erscheinen.

Beim Öffnungs- oder Schließvorgang der Plattform 102 signalisiert diese Beleuchtungsanordnung 300 auf der Unterseite der Plattform 102 wegen der schrägen Stellung, z.B. der 40° Stellung sowohl nach hinten als auch zur Seite die Gefahrensituation. Damit kann Verkehrsteilnehmern, die sich von der Seite als auch von hinten der öffnenden Plattform 102 nähern der Randbereich der Plattform 102 durch Beleuchtungsanordnung 300 signalisiert werden.

Figur 4b zeigt die zwei Lichtauskoppelmittel 302b wobei der Winkel 402 in die Plattform 102 integriert oder einstückig mit der Plattform 102 ausgebildet ist. Der Winkel 402 weist vorzugsweise zwei über die zwei Lichtauskoppelmittel 302b herausragende freie Enden 404 auf. Eines der freien Enden 404 erstreckt sich als in der Längsrichtung verlaufende Fase 408 mit einem Winkel 410 zwischen 40° und 50° insbesondere einem Winkel von 45° an der Unterseite 412 der Plattform 102. Jedes der beiden Lichtauskoppelmittel 302b ist in diesem Beispiel in einer jeweiligen Nut 110 gehalten. Die eine der Nuten 110 kann an der Fase 408 insbesondere lösbar oder in die Fase 408 integriert angeordnet sein. Diese Nut 110 kann durch zwei sich in Längsrichtung erstreckende Leisten gebildet sein, die das Lichtauskoppelmittel 302b insbesondere formschlüssig halten.

Beim Öffnungs- oder Schließvorgang der Plattform 102 signalisiert diese Beleuchtungsanordnung 300 auf der Unterseite der Plattform 102 wegen der Fase 408 sowohl nach hinten als auch zur Seite die Gefahrensituation. Damit kann Verkehrsteilnehmern, die sich von der Seite als auch von hinten der öffnenden Plattform 102 nähern der Randbereich der Plattform 102 durch Beleuchtungsanordnung 300 signalisiert werden.

Die eine der Nuten 110 ist derart zur Oberseite der Plattform 102 hin geöffnet, dass eine optische Achse A des von dieser Nut 110 gehaltenen Lichtauskoppelmittels 302 Senkrecht zur Oberseite der Plattform 102 verläuft. Die andere der Nuten 110 erstreckt sich zumindest abschnittsweise entlang der Fase 408 und ist derart geöffnet, dass eine optische Achse A des Lichtauskoppelmittels 302b schräg zu einer Querrichtung der Plattform 102 und schräg zur Unterseite der Plattform 102 insbesondere senkrecht zu einer durch die Fase 408 gebildete Oberlfäche der Plattform 102 verläuft. Das aus dem Lichtauskoppelmittel 302b austretende Licht lässt zumindest einen Teil den Längsaußenrandes 106 und/oder den Queraußenrand 108 der Plattform homogen hell erscheinen.

Ist die Plattform 102 auf Ladeflächenniveau geöffnet oder auf dem Boden abgesenkt, ist ebenfalls die Sicherheitswirkung durch die Beleuchtungsanordnung 300 erhöht.

Besonders bei Nacht oder bei schlechten Sichtverhältnissen, wie z. B. Regen, Nebel oder Schneefall, ist die Plattform durch den beleuchtenden und blinkenden Randbereich als potenzielle Gefahrenstelle deutlich sichtbar.

Für den Bediener wird die Sicherheit erhöht, da der Randbereich der Plattform 102 auf der Oberseite durch die Beleuchtungsanordnung 300 vollständig begrenzt beleuchtet wird. Der Bediener sieht den Randbereich der Plattform 102 jederzeit und wird optisch durch die Beleuchtungsanordnung 300 vor dem Erreichen des Randbereiches gewarnt.

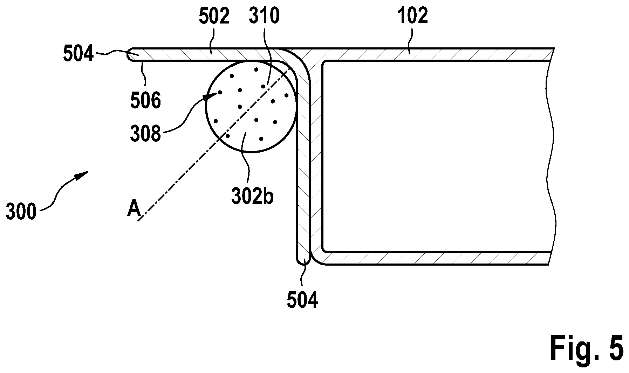

Figur 5 zeigt das Lichtauskoppelmittel 302b in einem Winkel 502. Der Winkel 502 weist vorzugsweise einen oder zwei über das Leuchtmittel 302 herausragende freie Enden 504 auf. Dadurch bieten die überstehenden freien Enden 504 des Winkels 502 dem Lichtauskoppelmittel 302b Schutz vor mechanischer Beanspruchung.

Die dem Lichtauskoppelmittel 302b zu gewandte Innenseite 306 der Nut 110, die dem Lichtauskoppelmittel 302b zu gewandte Innenseiten 406 der Nuten 110, sowie die dem Leuchtmittel 302 zugewandte Innenseite 506 des Winkels 502 sind zumindest abschnittsweise zur Reflexion von Licht ausgebildet, das aus dem Lichtauskoppelmittel 302b austritt. Derart aus dem Lichtauskoppelmittel 302b austretendes Licht wird reflektiert und führt zu einer Verstärkung der Intensität des Lichtaustritts aus der Nut 110 bzw. dem Winkel 402, 502. Dazu sind Innenflächen beispielsweise in vorgegebenen Winkel, insbesondere zwischen -90° und +90°, insbesondere zwischen -45° und +45° vorzugsweise zwischen -25° und 25°, zu einer optischen Achse A angeordnet. Die optische Achse A verläuft beispielsweise parallel zur Querrichtung und teilt die Nut 110 im Längsachsenrand 106 in zwei gleich große Hälften. Der Winkel 402, 502 wird durch die optische Achse beispielsweise in gleich große Hälften geteilt. Die Geometrie der Nut 110 oder des Winkels 402, 502 wird entsprechend des gewünschten Abstandswinkels gewählt.

Das Lichtauskoppelmittel 302b ist in einem Aspekt transparent oder semi-transparent. Dadurch wird das Licht durch das Lichtauskoppelmittel 302b hindurch reflektiert.

Die Nut 110 oder der Winkel 402, 502 sind in einem anderen Aspekt als optisches Element zur Beeinflussung des Lichtaustritts ausgebildet. Die Nut 110 oder der Winkel 402, 502 weisen vorzugsweise ein sich in Längsrichtung erstreckendes Querprofil dieser Art auf, das in Längsrichtung einen durchgehend gleichen Lichtaustrittswinkel für aus dem Leuchtmittel 302 austretendes Licht festlegt.

Vorteilhafterweise ist die Nut 302 bzw. sind die Winkel 402, 502 einstückig mit der Plattform 102 ausgebildet. Alternativ können die Nut 302 bzw. die Winkel 402, 502 als abnehmbare Randabschnittselemente, die sich entlang des Längs- bzw. Queraußenrandes der Plattform 102 erstrecken ausgebildet.

Besonders vorteilhaft erstrecken sich die Nut 302 bzw. die Winkel 402, 502 über die gesamte Länge oder Breite der Plattform 102. Besonders vorteilhaft ist es wenn die Nut 302 bzw. die Winkel 402, 502 über die gesamte Breite der Plattform 102 durchgehend zur Außenseite der Plattform 102 offen sind. Dadurch wird sowohl die Montage des Leuchtmittels 302 vereinfacht als auch besonders einfach eine homogene Helligkeitsverteilung erzielt.

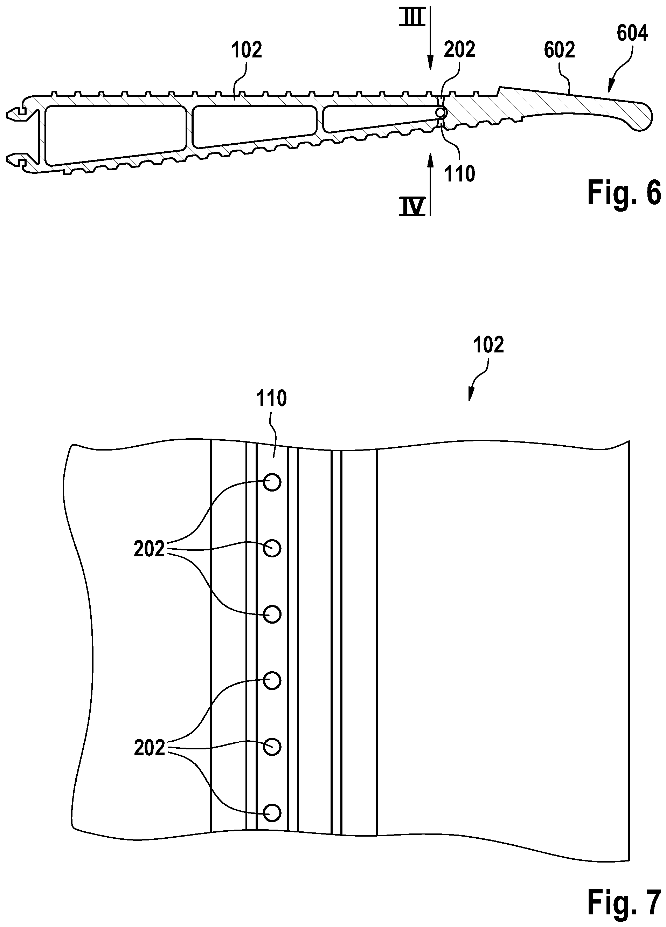

Die Nut 110 oder der Winkel 402, 502 kann auch wie in Figur 6 dargestellt an einem Queraußenrand 602 der Plattform 102 angeordnet sein, der mit einem Spitzenprofil 604 verbindbar ist.

Figur 7 zeigt eine Ansicht in Richtung des Pfeils III. oder IV. Im Beispiel aus Figur 6 sind zur Arbeitsfläche 104 hin die in Figur 7 dargestellten Öffnungen 202 vorgesehen. Diese sind bis zur Nut durchgängig offen. Die Nut 110 verläuft dabei an der Unterseite der Plattform 102. Die Öffnungen 202 erstrecken sich in Querrichtung entlang der Arbeitsfläche 104 im Bereich der Nut 110.

Das Lichtauskoppelmittel 302b, ist vorzugsweise stabförmig ausgebildet. Das Lichtauskoppelmittel 302b erstreckt sich vorzugsweise in der Nut 110.

Eine entsprechende Ansicht in Richtung des Pfeils IV. ergibt sich für den Fall, dass die Nut 110 durch die Arbeitsfläche 104 verläuft, und die Öffnungen 202 an der Unterseite der Plattform 102 angeordnet sind.

In beiden Fällen wird zumindest in einer Richtung eine homogene Helligkeitsverteilung erzielt. Es kann auch vorgesehen sein, sowohl an der Unterseite als auch in der Arbeitsfläche 104 eine Nut 110 mit Lichtauskoppelmittel 302b anzuordnen.

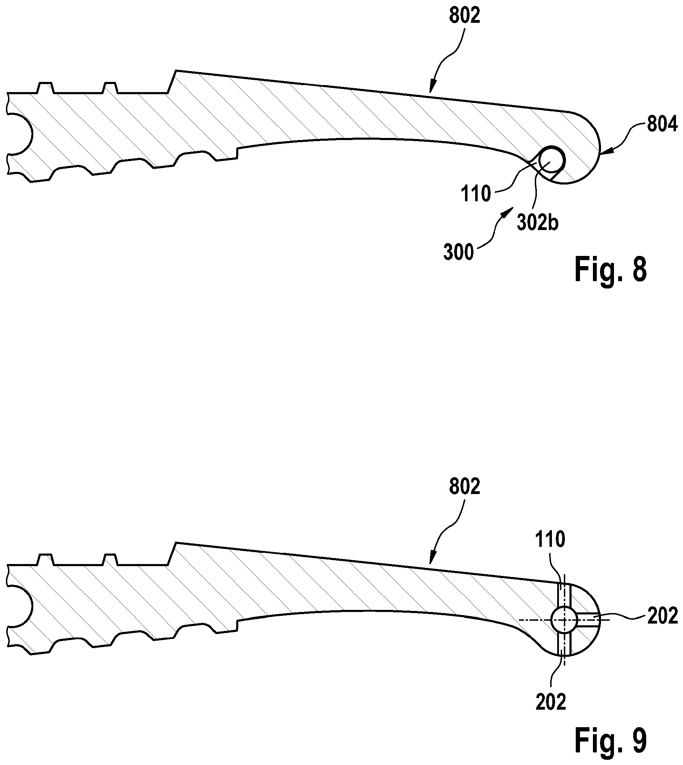

Die Nut 110 oder der Winkel 402, 502 sowie das Lichtauskoppelmittel 302b kann auch wie in Figur 8 dargestellt an einem Spitzenprofil 802 angeordnet sein. Das Spitzenprofil 802 ist beispielsweise als Verlängerung der Arbeitsfläche 104 in Längsrichtung, vorzugsweise abklappbar, ausgebildet. Das Spitzenprofil erstreckt sich vorzugsweise entlang der Breite des Queraußenrandes 108.

Zur Befestigung weisen der Außenrand der Plattform 102, vorzugsweise der Queraußenrand 108, und die diesem zugewandte Seite des Spitzenprofils 802 miteinander korrespondierende Verbindungsmittel auf. Der Verbindungsstelle gegenüberliegend ist an einer vorzugsweise abgerundeten Ladekante 804 des Spitzenprofils 802 die Nut 110 oder der Winkel 405, 505 zur Aufnahme des Lichtauskoppelmittel 302b angeordnet. Die Ladekante 804 erstreckt sich, vorzugsweise zylindrisch, entlang einer Kontaktfläche, die beim Absenken der Plattform 102 bis zum Boden aufliegt. Die Nut 110 oder der Winkel 405, 505 ist vorzugsweise auf einer der Ladekante 804 abgewandten Seite des Spitzenprofils 802 angeordnet. Vorzugsweise ist die Nut 302 oder der Winkel 405, 505 von der Kontaktfläche bezüglich des Bodens zurückgesetzten Abschnitt des Spitzenprofils 802 angeordnet. Dadurch ist die Lichtaustrittsöffnung bei abgesenkter Plattform 102 nicht im Kontakt mit dem Boden. Dadurch wird das Lichtauskoppelmittel 302b geschützt.

Figur 9 zeigt eine besonders bevorzugte Anordnung der Nut 110 im Spitzenprofil 802. Die Nut 110 erstreckt sich parallel zum Queraußenrand 108 in dem Spitzenprofil 802. In Figur 9 dargestellt ist beispielhaft die Anordnung in der der Ladekanten 804 zugewandten Seite des Spitzenprofils 802. Zusätzlich sind im Spitzenprofil 802 Öffnungen 202 vorgesehen. Mindestens eine Öffnung 202 ist gegenüber der Öffnung der Nut 110 im Spitzenprofil 802 angeordnet und verbindet die Unterseite durchgehend mit der Nut 110. Mindestens eine der Öffnungen 202 ist an einer dritten Seite des Spitzenprofils 802 angeordnet und bis zur Nut 110 durchgehend. Durch die Öffnung 202 in der dritten Seite strahlt vorzugsweise in der Arbeitsposition der Hubladebühne, aus dem Lichtauskoppelmittel 302b austretendes Licht entlang der Ebene der Arbeitsfläche 104 ab.

Die Lichtauskoppeleinrichtung 302b ist in diesem Fall vorzugsweise ein Rundstab, der in das Spitzenprofil 802 der Plattform 102 integriert ist. Das Spitzenprofil 802 ist im Beispiel ein Aluminiumprofil am Ende der Plattform 102, dass auch zum Auffahren benutzt wird. In das kreisrunde, vordere Ende des Spitzenprofils 802 wird in den Mittelpunkt des Kreisquerschnittes eine Bohrung eingebracht. Zur Vorderseite ist das Profil vorzugsweise mindestens in dem Winkelbereich für Fahrtrichtungsanzeiger im Bereich +/-15° geöffnet. Der offene Querschnitt für die Rundstableuchte des Profils kann mit einem Formfräser eingebracht werden oder auch direkt beim Pressen des Strangpressprofils erzeugt werden

Der Rundstab ist vorzugsweise aus Plexiglas (R). Der Rundstab hat eine Druckfestigkeit von 120 N/mm² und damit etwa die Hälfte der Druckfestigkeit von Aluminium. Beim Überrollen von 2000 kg Gewicht mit einem Hubwagen treten damit keine Beschädigung der Lichtauskoppeleinrichtung 302b auf. Sollte die Lichtauskoppeleinrichtung 302b eine Beschädigung erleiden, kann eine Reparatur durch austauschen der Lichtauskoppeleinrichtung 302b günstig ausgeführt werden.

Der kreisrunde Querschnitt hat im Beispiel einen Durchmesser von 6 mm. Das Leuchtmittel 302a zur Beleuchtung der Lichtauskoppeleinrichtung 302b kann in das Spitzenprofil 802 integriert sein. Das Leuchtmittel 302a kann einen kreisrunden Querschnitt, insbesondere von 6 mm aufweisen.

Die Leuchtlänge, d.h. die Länger der Lichtauskoppeleinrichtung 302b kann kleiner als oder gleich 200 mm sein. Daher funktioniert die Abstrahlung ohne besondere Anforderung an das verwendete Material.

Das Leuchtmittel 302a kann von einem äußeren Rand der Plattform an die Lichtauskopplungseinrichtung 302b angekoppelt sein.

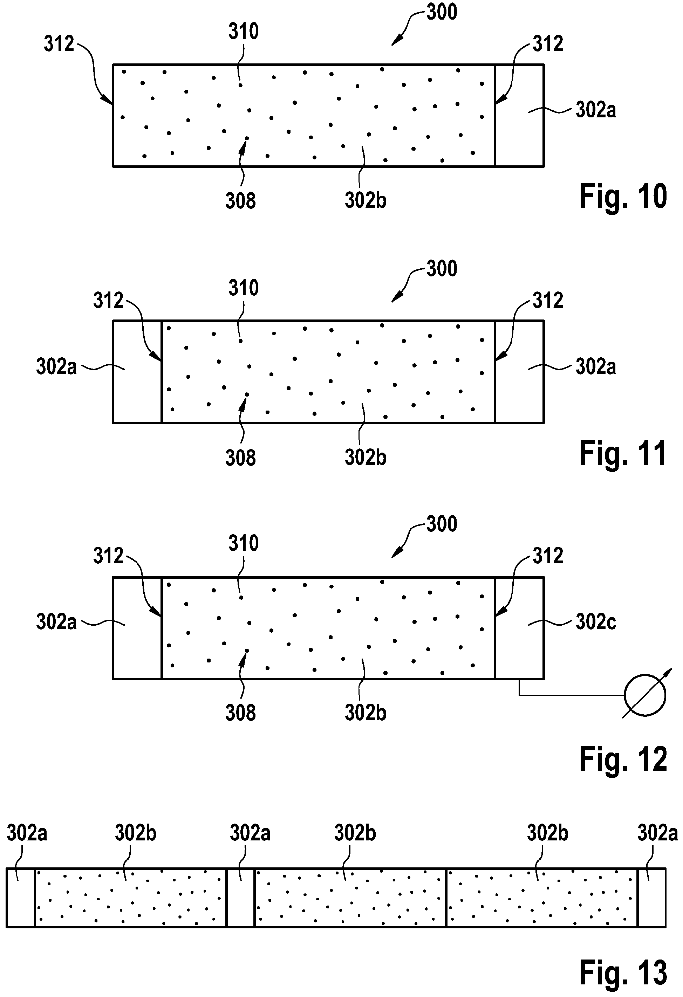

Figur 10 zeigt eine schematische Darstellung einer ersten Beleuchtungsanordnung 300 für die Plattform 102. An der ersten Beleuchtungsanordnung 300 ist an einer Stirnseite 312 des Lichtauskoppelmittels 302b ein Leuchtmittel 302a angeordnet.

Beispielsweise wird für das Lichtauskoppelmittel 302b der ersten Beleuchtungsanordnung 300 ein Material vorgesehen, aus dem Licht bis zu einer Länge von 1000 mm homogen auskoppelbar ist, wenn an der Stirnseiten 312 eine LED angeordnet ist.

Dazu wird beispielsweise ein Material eingesetzt, das dafür ausgelegt ist, über streuende Partikel 308 in dem Lichtleitelement 310, ein über die Stirnseite 312 eingekoppeltes Licht so zu streuen, dass es gleichmäßig an der Oberfläche des Lichtleitelements 310 austritt.

Das Leuchtmittel 302a ist zum Einkoppeln von Licht in das Lichtauskoppelmittel 302b ausgebildet. Im Beispiel ist das Leuchtmittel 302a ein Light Emitting Device, LED.

Durch eine einseitige, stirnseitige Einkopplung von Licht durch eine LED ist eine homogene Lichtabstrahlung bis zu 1000 mm Länge möglich. Vorzugsweise weist das Lichtauskoppelmittel 302b eine wenigstens abschnittsweise polierte Oberfläche auf, damit das Licht nicht durch Oberflächendefekte aus dem Lichtauskoppelmittel 302b ausgekoppelt wird.

Figur 11 zeigt eine schematische Darstellung einer zweiten Beleuchtungsanordnung 300 für die Plattform 102. An der zweiten Beleuchtungsanordnung 300 ist auf beiden Stirnseiten 312 des Lichtauskoppelmittels 302b ein Leuchtmittel 302a zum Einkoppeln von Licht in das Lichtauskoppelmittel 302b angeordnet. Für Lichtleitungslängen über einen 1000 mm hinaus, kann eine Lichteinkopplung an den beiden Stirnseiten 3123 des Lichtleitelementes 310 erfolgen. Damit ist eine konzeptbedingt einfache, günstige technische Lösung möglich, um die Lichtumrandung der Plattform 102 einer Hubladebühne zu ermöglichen.

Figur 12 zeigt eine schematische Darstellung einer dritten Beleuchtungsanordnung 300 für die Plattform. Bei der dritten Beleuchtungsanordnung 300 ist vorgesehen, dass an einer Stirnseite 312a des Lichtauskoppelmittels 302b ein Leuchtmittel 302a angeordnet ist und an einer dieser Stirnseite gegenüberliegenden Stirnseite 312b des Lichtauskoppelmittels 302b ein Sensor 302c angeordnet ist. Der Sensor 302c ist ausgebildet, eine Intensität von Licht zu erfassen, das den Sensor 302c durch das Lichtauskoppelmittel 302b erreicht. Im Beispiel ist der Sensor 302c eine Photodiode.

Figur 13 zeigt eine schematische Darstellung einer vierten Beleuchtungsanordnung 300 für ein Spitzenprofil 802.

Es ist möglich, das gesamte Spitzenprofil 802 in eine Beleuchtungseinheit für die Hubladebühne zu integrieren. Beispielsweise wird in einer Längsrichtung des Spitzenprofils 802 zwischen zwei äußeren Bereichen des Spitzenprofils 802 mit je einer Lichtauskopplungseinrichtung 302b ein mittlerer Bereich mit einer Lichtauskopplungseinrichtung 302b angeordnet. An jedem dieser Lichtauskopplungseinrichtungen 302b ist im Beispiel an einer der Stirnseiten 312 je ein Leuchtmittel 302a angeordnet. Die andere der Stirnseiten 312 der jeweiligen Lichtauskopplungseinrichtung 302b kann lichtundurchlässig ausgebildet sein. Die äußeren Bereiche sind dadurch unabhängig vom mittleren Bereich des Spitzenprofils 802 beleuchtbar.

Es ist auch möglich, das Licht an wenigstens einem Abschnitt einer Umfangsfläche der Lichtauskoppeleinrichtung 302b zusätzlich oder anstelle von einer der Stirnseiten 312 oder von beiden Stirnseiten 312 einzukoppeln.

In die Nut 110 oder den Winkel 402, 502 wird vorzugsweise kein Leuchtmittel 302a integriert, das selbständig Licht ausstrahlt sondern nur die Lichtauskoppeleinrichtung 302b. Vorzugsweise wird das Leuchtmittel 302a stirnseitig an der Lichtauskoppeleinrichtung 302 außerhalb der Nut 110 oder außerhalb des Winkels 402, 502 angeordnet.

Der Lichtleiter 310 kann auch ohne streuende Partikel 308 vorgesehen werden.

Es ist auch grundsätzlich möglich, das Licht von unten und nicht stirnseitig in den Lichtleiter einzukoppeln.

Bei einer Lichtleitung durch die Lichtleiteinrichtung 310 kann bei einer Abdeckung des Lichtauskoppelmittels 302a an seiner Oberfläche das Licht reflektiert und durch die Lichtleiteinrichtung 310 weiter geleitet werden.

Dadurch erhöht sich die Lichtintensität an einem der LED gegenüberliegenden Ende der Lichtleiteinrichtung 310. Diese erhöhte Lichtintensität kann durch den Sensor 302c, z.B. die Photodiode, gemessen werden und die Abweichungen zu einem Referenzwert ermittelt werden.

Dazu ist beispielsweise eine Steuerung der Hubladebühne 100 vorgesehen, die mit dem Sensor 302c verbunden ist. Die Steuerung ist im Beispiel auch zur Ansteuerung des Leuchtmittels 302a oder der Leuchtmittel 302a ausgebildet und mit diesen verbunden.

Es kann vorgesehen sein, abhängig von der gemessenen Lichtintensität eine Anpassung einer Lichtstärke des Leuchtmittels 302a an eine Umgebungslichtstärke vorzusehen.

Bei einer mittigen Anordnung des Sensors 302c, z.B. der Photodiode, an der Lichtauskoppeleinrichtung 302b und bei beidseitiger stirnseitiger Einkopplung durch zwei Leuchtmittel 302a, z.B. durch zwei LEDs, kann vorgesehen sein, dass jedes Leuchtmittel 302a auf die gleiche Lichtintensität geregelt wird. Dazu kann beispielswiese nur eine der LEDs eingeschaltet werden, die Lichtintensität durch den mittigen Sensor 302c gemessen und die LED auf den Sollwert eingeregelt werden. Bei der mittigen Anordnung des Sensors 302c kann vorgesehen sein, den Sensor 302c in der Lichtauskoppeleinrichtung 302b anzuordnen, oder zwei Lichtauskoppeleinrichtungen 302b vorzusehen, und den Sensor 302c zwischen einer der Stirnseiten einer der Lichtauskoppeleinrichtungen 302b und einer der Stirnseiten der anderen Lichtauskoppeleinrichtungen 302 anzuordnen. Damit wird erreicht, dass bei beidseitiger Lichteinkopplung die Lichtintensität durch die zwei unterschiedlichen LEDs identisch ist, auch wenn die LEDs unterschiedlich wären. Dieser physikalische Effekt kann auch genutzt werden, um dem Bediener das Betreten der Lichtauskoppeleinrichtung 302b zu signalisieren und damit die Rückmeldung zu geben, dass er sich am Rande der Plattform 102 befindet.

Somit kann die Lichtauskoppeleinrichtung 302b zusätzlich zu ihrer optischen Sicherheitswirkung auch als Sensor eingesetzt werden.

Eine Lichtintensitätsänderung durch ein Abdecken der Lichtauskoppeleinrichtung 302b mit einem Fuß oder einer Hand beträgt beispielsweise etwa 10%. Dies ist ein durch den Sensor 302c messbarer Effekt. Im Folgenden werden weitere Beispiele für drei verschiedene Szenarien angegeben. Die Beispiele basieren auf einer Messung bei der eine LED Licht mit einer Leistung von 9,4mW in einen einem 1000 mm langen Lichtauskoppeleinrichtung 302b einkoppelt. Die Lichtauskoppeleinrichtung 302b ist im Beispiel ein Plexiglas (R) Profil. Die Lichtauskoppeleinrichtung 302b ist im Beispiel in der Nut 110 gehalten. Ohne eine über die Abdeckung der Nut 110 hinausgehende Abdeckung der Lichtauskoppeleinrichtung 302b wird im Beispiel eine Intensität von 3,5µW am Sensor 302c gemessen.

Bei einer Abdeckung der Lichtauskoppeleinrichtung 302b erfolgt eine Änderung der gemessenen Intensität abhängig von der Stelle, an der die Abdeckung erfolgt:
Intensitätsänderung bei leichtem Druck:
   - am Anfang -12,3%
   - in der Mitte -8,2%
   - am Ende -4,9%
   - Mittelwert -8,5%

Intensitätsänderung bei mittlerem Druck:
- am Anfang -13,3%
- in der Mitte -10,3%
- am Ende -8,7%
- Mittelwert -10,8%

Intensitätsänderung bei starkem Druck:
- am Anfang -20,4%
- in der Mitte -13,0%
- am Ende -10,6%
- Mittelwert -14,7%

Das Leuchtmittel 302a kann zeitlich kontinuierlich leuchten und/oder ausgebildet sein zu blinken. Dazu ist das Leuchtmittel 302a beispielsweise mit der Steuerung der Hubladebühne 100 verbunden.

Die Steuerung ist vorzugsweise ausgebildet, eine Schwenkposition der Plattform zu erkennen und das Leuchtmittel 302a in einem ersten Betriebsmodus zu betreiben, in dem das Leuchtmittel 302a zeitlich kontinuierlich leuchtet, wenn eine erste Schwenkposition erkannt wird, und in einem zweiten Betriebsmodus zu betreiben, in dem das Leuchtmittel 302a blinkt, wenn eine zweite Schwenkposition erkannt wird.

Ein dritter Betriebsmodus, in dem das Leuchtmittel 302a zeitlich kontinuierlich ausgeschaltet ist, kann ebenfalls vorgesehen sein.

Vorzugsweise wird das Leuchtmittel 302a von der Steuerung abhängig von einem Zustand der Hubladebühne 100, insbesondere der Hebe-, Senk- oder Schwenkposition der Plattform 102 angesteuert.

Besonders vorzugsweise wird das Leuchtmittel 302a in einer ersten Schwenkposition der Plattform 102 kontinuierlich leuchtend betrieben.

Besonders vorzugsweise wird das Leuchtmittel 302a in einer zweiten Schwenkposition der Plattform 102 blinkend betrieben.

In der ersten Position ist die Plattform 102 vorzugsweise vertikal bezüglich einer Ladefläche eines Fahrzeugs angeordnet.

In der zweiten Position ist die Plattform 102 vorzugsweise horizontal bezüglich der Ladefläche angeordnet.

Durch die Steuerung wird das Leuchtmittel 302a vorzugsweise in der ersten Position kontinuierlich, und wenn die Plattform 102 die erste Position verlässt, blinkend betrieben.

Das Leuchtmittel 302a wird beispielsweise beim Schwenken der Plattform 102 in eine Arbeitsposition angeschaltet, um kontinuierlich zu leuchten oder zu blinken. Das Leuchtmittel wird beispielsweise beim Schwenken der Plattform 102 in eine Fahrstellung ausgeschaltet, oder von blinken zu kontinuierlichem Leuchten umgeschaltet.

Besonders vorteilhaft ist es, die Intensität der Beleuchtung abhängig von der Position einzustellen. Vorzugsweise wird das Leuchtmittel 302 mit einer Lichtstärke zwischen 50 und 250 cd betrieben, wenn das Leuchtmittel 302a kontinuierlich leuchtet. Vorzugsweise wird das Leuchtmittel 302a mit einer Lichtstärke zwischen 50 und 250 cd betrieben, wenn das Leuchtmittel 302a blinkt.

Das Leuchtmittel 302a wird vorzugsweise durch das Bordnetz des Fahrzeugs an dem die Hubladebühne 100 angebracht ist mit Energie versorgt. Vorzugsweise ist ein Stromanschluss an die Steuerung der Hubladebühne 100 vorgesehen.

Es kann auch ein Anschluss an das Bordnetz, vorzugsweise an die Ansteuerung der Blinklichter, des Fahrzeugs an dem die Hubladebühne 100 angeordnet ist, vorgesehen sein. Vorzugsweise ist dieser Anschluss ausgestaltet, das Leuchtmittel 302a bei Betätigung der Warnblinkanlage blinkend anzusteuern.

Wenn zwei Leuchtmittel 302a für das Lichtauskoppelmittel 302b vorgesehen sind, ist die Steuerung vorzugsweise ausgebildet die zwei Leuchtmittel 302a gemeinsam anzusteuern. Die zwei Leuchtmittel 302a sind bevorzugt dazu ausgebildet, im Wesentlichen synchron zu leuchten oder zu blinken.

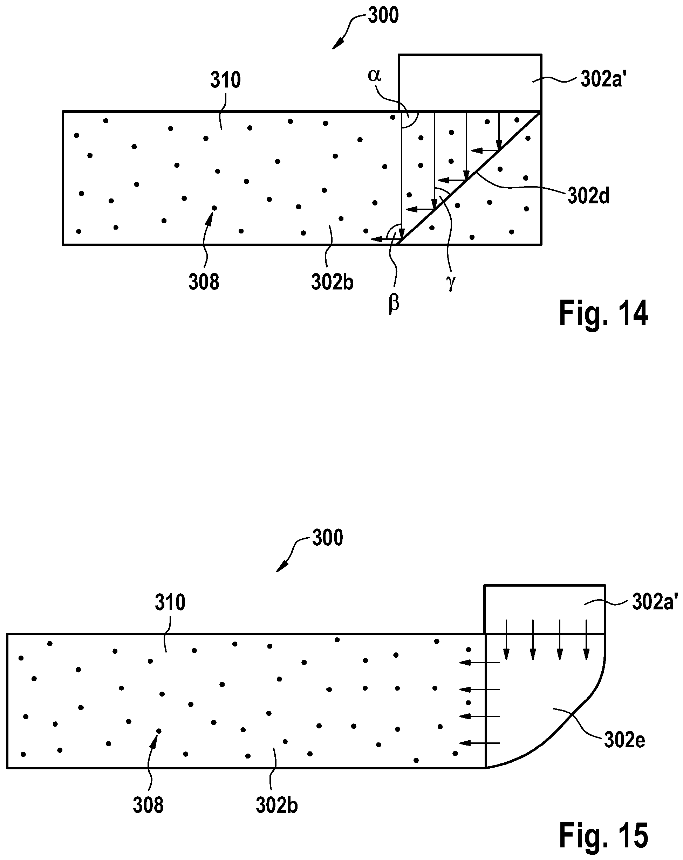

Das Leuchtmittel 302a ist ein Mittel, das dazu ausgebildet ist, Licht für eine Ausbreitung des Lichts im Wesentlichen in der Längsrichtung in das Lichtauskoppelmittel 302b einzukoppeln. Andere Ausführungen des Mittels werden im Folgenden mit Bezug auf die Figuren 14 und 15 beschrieben.

Das in Figur 14 schematisch dargestellte Mittel umfasst ein Leuchtmittel 302a'. Das Leuchtmittel 302a' ist ausgebildet, Licht aus dem Leuchtmittel 302a' in einem Winkel zur Längsrichtung gerichtet in das Lichtauskoppelmittel 302b einzukoppeln. Der Winkel liegt vorzugsweise zwischen 5° und 90°. Im dargestellten Beispiel beträgt der Winkel α=90°, d.h. Senkrecht zu einer Oberfläche des Lichtauskoppelmittels 302b. Ein anderer Winkel kann abhängig von einer Anordnung des Mittels an der Hubladebühne eingestellt sein, z.B. von 35° oder 45°.

Das Mittel umfasst zudem ein zumindest teilweise im Lichtauskoppelmittel 302b angeordnetes Umlenkoptik 302d, das ausgebildet ist, das Licht für eine Ausbreitung des Lichts im Wesentlichen in Längsrichtung zumindest teilweise zu reflektieren. Die Umlenkoptik 302d ist beispielsweise ein Spiegel. Aus dem Leuchtmittel 302a' austretende Lichtstrahlen werden beispielsweise im Wesentlichen senkrecht zur Längsrichtung des Lichtauskoppelmittels 302b in das Lichtauskoppelmittel 302b eingekoppelt. Diese Lichtstrahlen werden beispielsweise durch den Spiegel in einem Winkel von 45° reflektiert, so dass reflektierte Lichtstrahlen im Wesentlichen in der Längsrichtung des Lichtauskoppelmittels 302b verlaufen. In Figur 14 ist ein resultierender Winkel β = 90° zwischen einem einfallenden und einem reflektierten Lichtstrahl dargestellt. Ein Winkel γ für die Anordnung der Umlenkoptik 302d ist durch den Winkel α für die Einkopplung und den Winkel β für die Auskopplung bestimmt. Im in Figur 14 dargestellten Beispiel beträgt der Winkel γ = 45° bezüglich der Längsrichtung des Lichtauskoppelmittels 302b. Die Umlenkoptik 302d kann auch in anderen Winkeln γ angeordnet sein.

Das in Figur 15 schematisch dargestellte Mittel umfasst einen Lichtwellenleiter 302e umfasst, der zwischen dem Leuchtmittel 302a' und dem Lichtauskoppelmittel 302b angeordnet ist. Das Leuchtmittel 302a' kann beliebig angeordnet sein. Das Licht wird in diesem Fall durch den Lichtwellenleiter 302e, z.B. über Glasfaser, weitergeleitet und dann stirnseitig in das Lichtauskoppelmittel 302b eingekoppelt. Anstelle der in Figur 15 dargestellten stirnseitigen Einkopplung kann auch eine Einkopplung über eine andere Oberfläche des Lichtauskoppelmittels 302b, z.B. im Wesentlichen senkrecht und mit der Umlenkoptik 302d erfolgen.

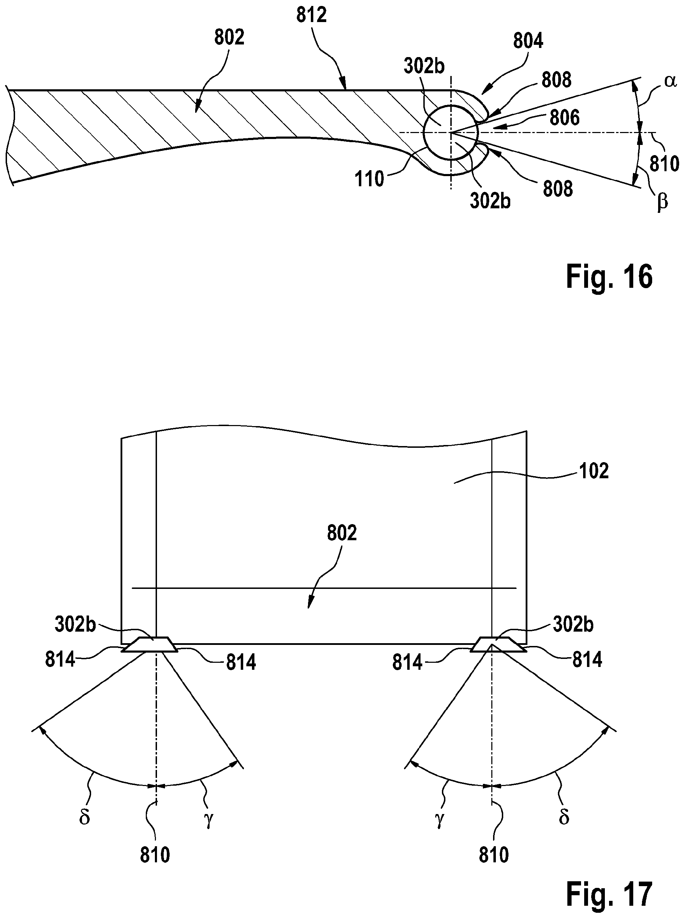

Das Lichtauskoppelmittel 302b kann auch Blinkleuchten ersetzen, die für Fahrtrichtungsanzeiger eingesetzt werden. Dies wird im Folgenden beispielhaft für Plexiglaselemente in dem Spitzenprofil 802 anhand der Figur 16 und 17 erläutert. Das Leuchtmittel und das Lichtauskoppelmittel 302b erfüllt dazu alle Anforderungen für einen Fahrrichtungsanzeiger. Diese sind beispielsweise in Regelung Nr. 6 der Wirtschaftskommission der Vereinten Nationen für Europa (UNECE) - Einheitliche Bedingungen für die Genehmigung von Fahrtrichtungsanzeigern für Kraftfahrzeuge und ihre Anhänger definiert.

In Figur 16 ist eine bevorzugte Anordnung des Lichtauskoppelmittels 302b und der Nut 110 an der Ladekante 804 des Spitzenprofils 802 dargestellt. Die Nut 110 erstreckt sich im Beispiel parallel zum Queraußenrand im Spitzenprofil 802. Das Lichtauskoppelmittel 302b erstreckt sich im Beispiel parallel zum Queraußenrand in der Nut 110. Die Nut 110 umfasst eine Öffnung 806 in der Ladekante 804, die sich im Beispiel parallel zum Queraußenrand in der Ladekante 804 erstreckt. Die Ladekante 804 weist im Bereich der Öffnung 806 auf beiden Seiten Profilflächen 808, die sich im Beispiel parallel zum Queraußenrand erstrecken.

Vorzugsweise ist eine der Profilflächen 808 bezüglich einer optischen Achse 810 um eine Winkel α von im Beispiel +15° geneigt. Die andere der Profilflächen 808 ist vorzugsweise gegenüber der optischen Achse 810 um einen Winkel β von im Beispiel -15° geneigt. Andere Winkel sind ebenfalls möglich. Die Profilflächen 808 sind in diesem Beispiel gegeneinander um 30° geneigt. Für Licht, das aus dem Lichtauskoppelmittel 302b austritt, wird damit konstruktiv erreicht, dass ein Abstrahlwinkel α von im Beispiel +/-15° sichergestellt ist. Die Öffnung 806 ist vorzugsweise derart in der Ladekante 804 orientiert angeordnet, dass Licht dann bezüglich einer Fahrtrichtung eines Fahrzeugs, an dem die Hubladebühne 100 angeordnet ist, nach hinten hin abstrahlen kann, wenn die Ladekante 804 auf dem Boden aufliegt.

Die Öffnung 806 ist vorzugsweise derart in der Ladekante 804 orientiert angeordnet, dass die optische Achse 810 im Wesentlichen parallel zu einer Ladefläche 812 des Spitzenprofils 802 angeordnet ist.

Die Öffnung 806 ist vorzugsweise derart in der Ladekante 804 angeordnet, dass Licht, welches aus der Öffnung 806 austritt, bezüglich der Erstreckung entlang des Queraußenrandes auf einer Seite der optischen Achse 810 mit einem Abstrahlwinkel γ im Beispiel von 45° und auf einer dieser bezüglich der Erstreckung entlang des Queraußenrandes anderen Seite der optischen Achse mit einem Abstrahlwinkel δ im Beispiel von 80° bezüglich der optischen Achse 810 abstrahlt. Dies ist in Figur 17 beispielhaft dargestellt. Im Beispiel sind zwei Öffnungen 806 und zwei Lichtauskoppelmittel 302b vorgesehen, die voneinander bezüglich der Erstreckung entlang des Queraußenrandes voneinander beabstandet angeordnet sind. Dazu sind im Beispiel entsprechend der Abstrahlwinkel bezüglich der optischen Achse 810 geneigte Profilflächen 814 vorgesehen. Die einander zugewandten, d.h. inneren Profilflächen 814 sind im Beispiel entsprechend dem Abstrahlwinkel γ bezüglich der optischen Achse 810 geneigt. Die anderen Profilflächen 814 sind im Beispiel mit dem Abstrahlwinkel δ bezüglich der optischen Achse 810 geneigt. Andere Winkel sind ebenfalls möglich.

Das Leuchtmittel und das Lichtauskoppelmittel 302b sind derart aufeinander abgestimmt und zueinander angeordnet, dass eine Lichtstärke des aus dem Lichtauskoppelmittel 302b durch die Öffnung 806 austretenden Lichts von 50-500 cd erreicht wird, dass eine Lichtfarbe Gelb oder Amber mit einer Blinkfrequenz von 1,5 Hz und dem Abstrahlwinkel +/-15° nach hinten, 80° nach außen und 45°nach innen erreicht wird.

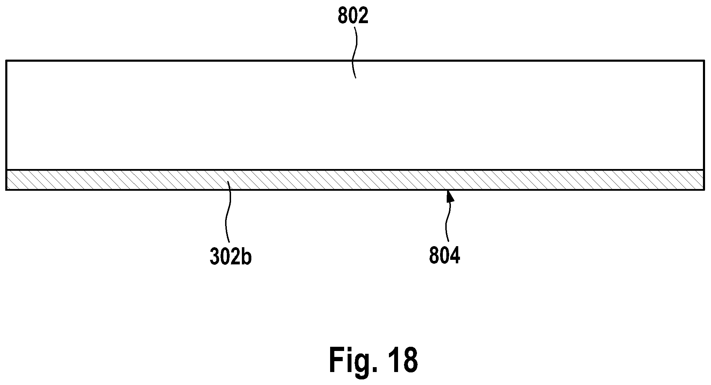

Figur 18 zeigt eine Anordnung mit einer Leuchte im Spitzenprofil 802 bei der sich das Lichtauskoppelmittel 302b entlang der Ladekante 804 erstreckt. Das Lichtauskoppelmittel 302b erstreckt sich in dem in Figur 18 dargestellten Beispiel entlang der gesamten Ladekante 804. Die Leuchte umfasst im Beispiel wenigstens ein Leuchtmittel 302a aus dem Licht in das Lichtauskoppelmittel 302b eingekoppelt werden kann. Dadurch wird eine durchgehende Leuchte realisiert. In das Lichtauskoppelmittel 302b wird Licht wie zuvor beschrieben aus dem wenigstens einem Leuchtmittel 302a (nicht dargestellt) eingekoppelt.

Bevorzugt wird das wenigstens eine Leuchtmittel 302 angesteuert, im Wesentlichen synchron zu anderen Leuchtmitteln 302 derselben Hubladebühne 100 zu leuchten oder zu blinken, insbesondere synchron zu wenigstens einem anderen Leuchtmittel 302a für eine Beleuchtung in einem Längsbereich der Plattform 102, d.h. einem Bereich der Plattform 102, der sich in der Längsrichtung erstreckt.

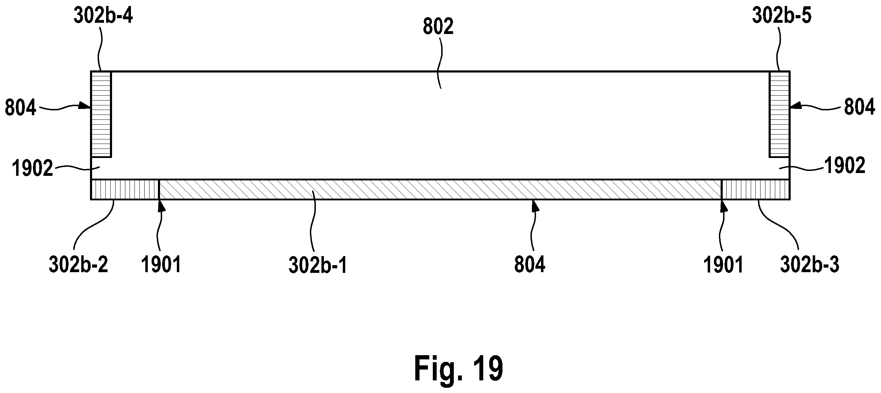

Figur 19 zeigt eine Anordnung mit zwei äußeren Leuchten und einer dreiteiligen Leuchte im Spitzenprofil 802. Die dreiteilige Leuchte ist zwischen den äußeren Leuchten angeordnet.

Die dreiteilige Leuchte im Spitzenprofil 802 umfasst ein erstes Lichtauskoppelmittel 302b-1, ein zweites Lichtauskoppelmittel 302b-2 und ein drittes Lichtauskoppelmittel 302b-3. Diese erstrecken sich in der Querrichtung entlang der Ladekante 804 im Spitzenprofil 802. Das erste Lichtauskoppelmittel 302b-1 stellt einen mittleren Teil der dreiteiligen Leuchte dar. Das zweite Lichtauskoppelmittel 302b-2 und das dritte Lichtauskoppelmittel 302b-3 können einen äußeren Teil der dreiteiligen Leuchte darstellen. Statt einer dreiteiligen Leuchte kann auch eine zweiteilige oder mehrteilige Leuchte vorgesehen sein. Das erste Lichtauskoppelmittel 302b-1 ist insbesondere mittig zwischen dem zweiten Lichtauskoppelmittel 302b-2 und dem dritten Lichtauskoppelmittel 302b-3 angeordnet. In diese Lichtauskoppelmittel wird Licht wie zuvor beschrieben aus wenigstens einem Leuchtmittel 302a (nicht dargestellt) insbesondere an Anschlussstellen 1901 eingekoppelt. Das erste Lichtauskoppelmittel 302b-1 das zweite Lichtauskoppelmittel 302b-2 und das dritte Lichtauskoppelmittel 302b-3 können an den Anschlussstellen 1901 insbesondere fluchtend voneinander in Querrichtung beabstandet oder in Querrichtung bündig aneinander anschließend angeordnet sein. An den Anschlussstellen 1901 kann an wenigstens einem der Lichtauskoppelmittel stirnseitig ein reflektierendes Element oder ein für Licht undurchlässiges Element angeordnet sein. Dadurch ist das erste Lichtauskoppelmittel 302b-1 unabhängig vom zweiten Lichtauskoppelmittel 302b-2 und dem dritten Lichtauskoppelmittel 302b-3 beleuchtbar.

Die zwei äußeren Leuchten im Spitzenprofil 802 sind optional. Die zwei äußeren Leuchten umfassen je ein Lichtauskoppelmittel. Ein viertes Lichtauskoppelmittel 302b-4 und ein fünftes Lichtauskoppelmittel 302b-5 sind im Beispiel an einander in der Querrichtung gegenüberliegenden Seiten des Spitzenprofils 802 angeordnet und erstrecken sich in der Längsrichtung. Das vierte Lichtauskoppelmittel 302b-4 erstreckt sich im Beispiel vom zweiten Lichtauskoppelmittel 302b-2 ausgehend von der Ladekante 804 weg. Das vierte Lichtauskoppelmittel 302b-4 kann durch ein reflektierendes oder ein für Licht undurchlässiges erstes Abstandsmittel 1902 vom zweiten Lichtauskoppelmittel 302b-2 beabstandet angeordnet sein. Das fünfte Lichtauskoppelmittel 302b-5 erstreckt sich im Beispiel vom dritten Lichtauskoppelmittel 302b-3 ausgehend von der Ladekante 804 weg. Das fünfte Lichtauskoppelmittel 302b-5 kann durch ein reflektierendes oder ein für Licht undurchlässiges zweites Abstandsmittel 1903 vom dritten Lichtauskoppelmittel 302b-3 beabstandet angeordnet sein. Das erste Abstandsmittel 1902 oder das zweite Abstandsmittel 1903 kann durch einen Teil des Spitzenprofils 802 gebildet sein. Dadurch ist das zweite Lichtauskoppelmittel 302b-2 unabhängig vierten Lichtauskoppelmittel 302b-4 beleuchtbar. Dadurch ist das dritte Lichtauskoppelmittel 302b-2 unabhängig fünften Lichtauskoppelmittel 302b-5 beleuchtbar.

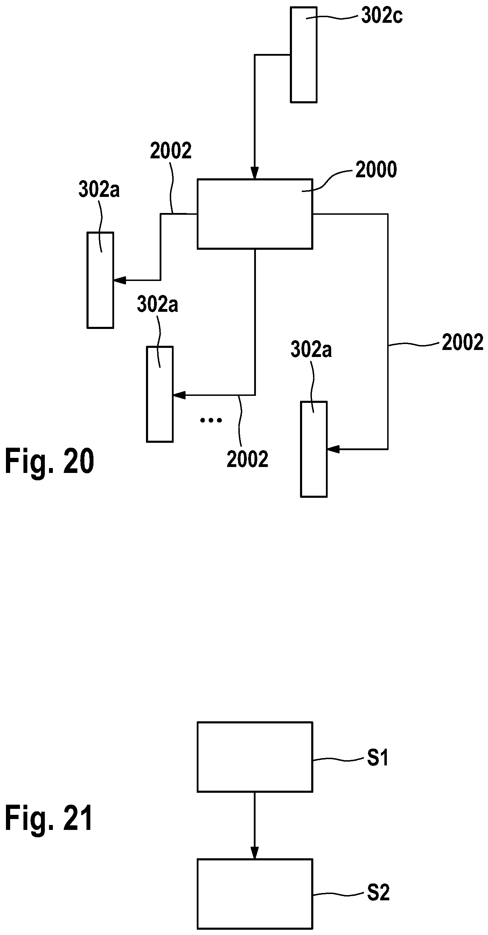

Figur 20 zeigt schematisch Teile eines Steuergeräts 2000 für die Hubladebühne 100. Das Steuergerät 2000 umfasst im Beispiel wenigstens einen Prozessor und einen Speicher für Instruktionen, bei deren Ausführung auf dem Prozessor wenigstens ein Ansteuersignal für wenigstens eine Leuchte bestimmt wird. Im Beispiel ist eine Vielzahl von Leuchtmittel 302a über wenigstens eine Ansteuerleitung 2002 für das wenigstens ein Ansteuersignal mit dem Steuergerät 2000 verbunden.

Bei der Ansteuerung wenigstens eines der Leuchtmittel 302a insbesondere der beschriebenen Leuchten mit dem Ansteuersignal oder mit mehreren Ansteuersignalen gibt es verschiedene Möglichkeiten. Das Steuergerät 2000 kann ausgebildet sein, die dreiteilige Leuchte und die beiden äußeren Leuchten dazu anzusteuern, dass die beiden äußeren Leuchten zeitgleich mit dem äußeren Teil der dreiteiligen Leuchte und/oder im Wechsel mit dem mittleren Teil der dreiteiligen Leuchte blinken. Die äußeren Leuchten und/oder der äußere Teil der dreiteiligen Leuchte können auch dazu angesteuert werden zu blinken wobei der mittlere Teil der dreiteiligen Leuchte angesteuert wird, dauerhaft zu leuchten insbesondere während der äußere Teil angesteuert wird zu blinken.

Das Steuergerät 2000 kann ausgebildet sein, für die Hubladebühne 100 abhängig von einer von wenigstens einem Sensor 302c erfassten Intensität von Licht einen Betriebsmodus für die Hubladebühne 100 zu bestimmen. Bevorzugt ist das Steuergerät 2000 ausgebildet, die zuvor beschriebene Steuerung abhängig von der Lichtintensitätsänderung auszuführen. Beispielsweise ist das Steuergerät 2000 ausgebildet, die Steuerung für eines oder mehrere der drei verschiedenen zuvor beschriebenen Szenarien auszuführen.

Ein Verfahren zum Betreiben der Hubladebühne 100 sieht vor, dass in einem Schritt S1 geprüft wird, ob die Plattform 102 in der ersten Position oder in der zweiten Position angeordnet ist.

In einem anschließenden Schritt S2 wird wenigstens ein an der Hubladebühne 100 angeordnetes Leuchtmittel oder werden wenigstens zwei an der Hubladebühne 100 angeordnete Leuchtmittel angesteuert. Beispielsweise wird das wenigstens eine Leuchtmittel oder werden die wenigstens zwei Leuchtmittel abhängig vom Zustand der Hubladebühne 100, insbesondere der Hebe-, Senk- oder Schwenkposition der Plattform 102 entweder abgeschaltet oder blinkend oder dauerhaft leuchtend angesteuert.

Beispielsweise werden wenigstens zwei Leuchtmittel, die an der Hubladebühne angeordnet ist dazu angesteuert, im Wesentlichen synchron miteinander oder abwechselnd zueinander zu blinken oder dauerhaft zu Leuchten. Das Verfahren kann vorsehen, die wenigstens zwei Leuchtmittel anzusteuern während wenigstens ein anderes an der Hubladebühne angeordnetes Leuchtmittel blinkt, synchron dazu oder abwechselnd dazu zu blinken oder währenddessen dauerhaft zu Leuchten.

Beispielsweise wird wenigstens ein Leuchtmittel in der ersten Schwenkposition der Plattform 102 kontinuierlich leuchtend betrieben. Beispielsweise wird das wenigstens eine Leuchtmittel in der zweiten Schwenkposition der Plattform 102 blinkend betrieben.

Zusätzlich oder alternativ dazu kann das Verfahren vorsehen, dass abhängig von der vom Sensor 302c erfassten Intensität von Licht der Betriebsmodus für die Hubladebühne 100 bestimmt wird. Beispielsweise wird abhängig von der erfassten Intensität von Licht das Betreten des Randes der Plattform 102 signalisiert. Beispielsweise wird das Betreten des Randes der Plattform 102 signalisiert wobei von einem Betriebsmodus, in dem ein vom Sensor 302c überwachtes Lichtauskopplungsmittel 302b mit wenigstens einem Leuchtmittel kontinuierlich leuchtend betrieben wird, in einen Betriebsmodus geschaltet wird, in dem das Lichtauskopplungsmittel 302b mit dem wenigstens einem Leuchtmittel blinkend betrieben wird.

Gemäß einer beispielhaften Ausführung einer Hubladebühne (100) mit einer Plattform (102) ist vorgesehen, dass die Hubladebühne (100) einen Außenrand aufweist, wobei sich im Außenrand eine Nut (110) oder ein Winkel (402, 502) in einer Richtung erstreckt, wobei die Nut (110) oder der Winkel (402, 502) zur Außenseite der Plattform (102) hin offen ist, wobei in der Nut (110) oder im Winkel (402, 502) zumindest abschnittsweise ein insbesondere stabförmiges Lichtauskoppelmittel (302b) so anordenbar ist, dass sich das Lichtauskoppelmittel (302b) in der Richtung erstreckt, wobei Mittel vorgesehen sind, die dazu konfiguriert sind, Licht blinkend oder dauerhaft leuchtend in das Lichtauskoppelmittel (302b) einzukoppeln, wobei entweder der Außenrand eine sich in der Richtung erstreckende Fase (408) zu einer Unterseite (412) der Plattform (102) aufweist, in oder an der die Nut (110) oder der Winkel (402, 502) angeordnet ist oder wobei die Nut (110) oder der Winkel (402, 502) derart geöffnet ist, dass eine optische Achse (A) des Lichtauskoppelmittels (302b) schräg zu einer Querrichtung der Plattform (102) und schräg zu einer Unterseite der Plattform (102) anordenbar ist.

Gemäß der beispielhaften Ausführung kann vorgesehen sein, dass Mittel (302a; 302a', 302d; 302a', 302e) vorgesehen sind, die dazu ausgebildet sind, Licht für eine Ausbreitung des Lichts im Wesentlichen in der Richtung in das Lichtauskoppelmittel (302b) einzukoppeln, oder dass Mittel vorgesehen sind, insbesondere ein in die Nut (110) oder den Winkel (402, 502) integriertes Leuchtmittel (302a), die dazu ausgebildet sind, das Licht an wenigstens einem Abschnitt einer Umfangsfläche des Lichtauskoppelmittels (302b) einzukoppeln.

Gemäß der beispielhaften Ausführung kann ein Leuchtmittel (302a) vorgesehen sein, wobei das Leuchtmittel (302a) ausgebildet ist, Licht aus dem Leuchtmittel (302a) im Wesentlichen in der Richtung gerichtet in das Lichtauskoppelmittel (302b) einzukoppeln.

Gemäß der beispielhaften Ausführung kann das Leuchtmittel (302a) an einer Stirnseite des Lichtauskoppelmittels (302b) angeordnet sein.

Gemäß der beispielhaften Ausführung kann vorgesehen sein, dass auf beiden Stirnseiten des Lichtauskoppelmittels (302b) ein Leuchtmittel (302a) zum Einkoppeln von Licht in das Lichtauskoppelmittel (302b) angeordnet ist.

Gemäß der beispielhaften Ausführung kann ein Leuchtmittel (302a') vorgesehen sein, wobei das Leuchtmittel (302a') ausgebildet ist, Licht aus dem Leuchtmittel (302a') in einem Winkel insbesondere zwischen 5° und 90° zur Längsrichtung gerichtet in das Lichtauskoppelmittel (302b) einzukoppeln, wobei eine zumindest teilweise im Lichtauskoppelmittel (302b) angeordnete Umlenkoptik (302d) ausgebildet ist, das Licht für eine Ausbreitung des Lichts im Wesentlichen in der Richtung zumindest teilweise zu reflektieren.

Gemäß der beispielhaften Ausführung kann vorgesehen sein, dass das Mittel (302a', 302e) einen Lichtwellenleiter (302e) umfasst, der zwischen dem Leuchtmittel (302a') und dem Lichtauskoppelmittel (302b) angeordnet ist.

Gemäß der beispielhaften Ausführung kann vorgesehen sein, dass die Nut (110) oder der Winkel (402, 502) einen sich in der Richtung erstreckenden Abschnitt mit einem Innenprofil, insbesondere einem Innenradius aufweist, der dem Außenprofil, insbesondere dem Außenradius des Lichtauskoppelmittels (302b) entspricht, und/oder dadurch gekennzeichnet, dass der Winkel (402, 502) oder die Nut (110) als optisches Element zur Reflexion von aus dem Lichtauskoppelmittel (302b) austretendem Licht ausgebildet ist, und/oder dadurch gekennzeichnet, dass die Nut (110) oder der Winkel (402, 502) quer zur Richtung ein Querprofil aufweist, das in der Richtung einen durchgehend gleichen Lichtaustrittswinkel für aus dem Lichtauskoppelmittel (302b) austretendes Licht festlegt, und/oder dadurch gekennzeichnet, dass das Lichtauskoppelmittel (302b) Streupartikel aufweist, die in einem Lichtleitelement, insbesondere einem Kunststoff, einem Polymethylmethacrylat oder Quarzglas angeordnet sind, und/oder dadurch gekennzeichnet, dass die Nut (110) oder der Winkel (402, 502) sowie das Lichtauskoppelmittel (302b) sich zumindest abschnittsweise entlang eines Außenrands eines Spitzenprofils (802) für die Hubladebühne (100) oder eines Außenrands der Plattform (102) erstreckt.

Gemäß der beispielhaften Ausführung kann vorgesehen sein, dass ein erstes insbesondere mehrteiliges Lichtauskoppelmittel (302b-1, 302b-2, 302b-3) sich entlang eines ersten Außenrands des Spitzenprofils (802) erstreckt wobei sich ein zweites insbesondere einteiliges Lichtauskoppelmittel (302b-4; 302b-5) sich entlang eines zweiten Außenrands des Spitzenprofils (802) erstreckt. 10. Hubladebühne (100) nach Anspruch 8 oder 9, dadurch gekennzeichnet, dass das Spitzenprofil (802) eine Ladekante (804) mit einer Öffnung (806) aufweist, wobei die Ladekante (804) im Bereich der Öffnung (806) auf beiden Seiten der Öffnung (806) Profilflächen (808) aufweist, die sich im Wesentlichen parallel zur Ladekante (804) erstrecken und gegeneinander um einen Winkel insbesondere zwischen 25° und 35° vorzugsweise von 30° oder bezüglich einer optischen Achse (810) um einen Winkel (α, β) insbesondere zwischen 20° und - 20° vorzugsweise von +15° oder -15° geneigt sind. 11. Hubladebühne (100) nach Anspruch 10, dadurch gekennzeichnet, dass die Ladekante (804) bezüglich der optischen Achse (810) geneigte Profilflächen (814) aufweist, die die Öffnung (806) einschließen, wobei eine der Profilflächen (814) mit einem Winkel (γ) insbesondere zwischen 40° und 50° bevorzugt 45° bezüglich der optischen Achse (810) geneigt ist, wobei die anderen Profilfläche (814) mit einem Winkel (δ) insbesondere zwischen 75° und 85° vorzugsweise 80° bezüglich der optischen Achse (810) geneigt ist.

Gemäß der beispielhaften Ausführung kann vorgesehen sein, dass das an einer Stirnseite des Lichtauskoppelmittels (302b) ein Leuchtmittel (302a) angeordnet ist und an einer dieser Stirnseite gegenüberliegenden Stirnseite des Lichtauskoppelmittels (302a) ein Sensor (302c) angeordnet ist, wobei der Sensor (302c) ausgebildet ist, eine Intensität von Licht zu erfassen, das den Sensor (302c) durch das Lichtauskoppelmittel (302b) erreicht.

Gemäß der beispielhaften Ausführung kann ein Steuergerät (2000) für die Hubladebühne (100) gemäß der beispielhaften Ausführung vorgesehen sein, wobei das Steuergerät (2000) ausgebildet ist, wenigstens zwei Leuchtmittel (302a, 302a') anzusteuern, insbesondere während wenigstens ein anderes Leuchtmittel (302a) blinkt, im Wesentlichen dazu und/oder zueinander synchron oder abwechselnd zu blinken oder dauerhaft zu Leuchten.

Gemäß der beispielhaften Ausführung kann vorgesehen sein, dass das Steuergerät (2000) ausgebildet ist, abhängig von einer von wenigstens einem Sensor (302c) erfassten Intensität von Licht einen Betriebsmodus für die Hubladebühne (100) zu bestimmen.

Gemäß der beispielhaften Ausführung kann ein Verfahren zum Betreiben einer Hubladebühne (100) vorgesehen sein, wobei wenigstens zwei an einer Hubladebühne (100) gemäß der beispielhaften Ausführung angeordnete Leuchtmittel (302a, 302a') angesteuert werden (S2), insbesondere während wenigstens ein anderes an der Hubladebühne (100) angeordnetes Leuchtmittel (302a) blinkt, im Wesentlichen synchron miteinander oder abwechselnd zueinander zu blinken oder dauerhaft zu Leuchten, oder dadurch gekennzeichnet, dass abhängig von einer Intensität von Licht, die von wenigstens einem an einem Lichtauskoppelauskoppelmittel (302b) einer Hubladebühne (100) nach Anspruch 12 angeordneten Sensor (302c) erfasst wird (S1), ein Betriebsmodus für die Hubladebühne (100) bestimmt wird (S2).

## Patentansprüche

1. Hubladebühne (100) mit einer Plattform (102), wobei die Hubladebühne (100) einen Queraußenrand aufweist, wobei sich im Queraußenrand oder in einem am Queraußenrand angeordneten Spitzenprofil (802), das sich entlang des Queraußenrandes erstreckt, oder in einem sich entlang des Queraußenrandes erstreckenden, an einem Längsaußenrand der Plattform (102) angeordneten Randabschnittselement, eine Nut (110) oder ein Winkel (402, 502) in der Querrichtung erstreckt, wobei die Nut (110) oder der Winkel (402, 502) zur Außenseite der Plattform (102) hin offen ist, wobei in der Nut (110) oder im Winkel (402, 502) zumindest abschnittsweise ein insbesondere stabförmiges Lichtauskoppelmittel (302b) so angeordnet ist, dass sich das Lichtauskoppelmittel (302b) in der Querrichtung erstreckt, wobei Leuchtmittel vorgesehen sind, die dazu konfiguriert sind, Licht blinkend oder dauerhaft leuchtend in das Lichtauskoppelmittel (302b) einzukoppeln, **dadurch gekennzeichnet, dass** auf beiden Stirnseiten des Lichtauskoppelmittels (302b) jeweils eines der Leuchtmittel (302a) zum Einkoppeln von Licht in das Lichtauskoppelmittel (302b) angeordnet ist, das ausgebildet ist, Licht aus dem Leuchtmittel (302a) im Wesentlichen in der Querrichtung gerichtet in das Lichtauskoppelmittel (302b) einzukoppeln.

2. Hubladebühne (100) nach einem der vorhergehenden Ansprüche, **dadurch gekennzeichnet, dass** die Nut (110) oder der Winkel (402, 502) einen sich in der Querrichtung erstreckenden Abschnitt mit einem Innenprofil, insbesondere einem Innenradius aufweist, der dem Außenprofil, insbesondere dem Außenradius des Lichtauskoppelmittels (302b) entspricht, und/oder **dadurch gekennzeichnet, dass** der Winkel (402, 502) oder die Nut (110) als optisches Element zur Reflexion von aus dem Lichtauskoppelmittel (302b) austretendem Licht ausgebildet ist, und/oder **dadurch gekennzeichnet, dass** die Nut (110) oder der Winkel (402, 502) quer zur Querrichtung ein Querprofil aufweist, das in der Querrichtung einen durchgehend gleichen Lichtaustrittswinkel für aus dem Lichtauskoppelmittel (302b) austretendes Licht festlegt, und/oder **dadurch gekennzeichnet, dass** das Lichtauskoppelmittel (302b) Streupartikel aufweist, die in einem Lichtleitelement, insbesondere einem Kunststoff, einem Polymethylmethacrylat oder Quarzglas angeordnet sind, und/oder **dadurch gekennzeichnet, dass** die Nut (110) oder der Winkel (402, 502) sowie das Lichtauskoppelmittel (302b) sich zumindest abschnittsweise entlang eines Außenrands eines Spitzenprofils (802) für die Hubladebühne (100) oder eines Außenrands der Plattform (102) erstreckt.

3. Hubladebühne (100) nach Anspruch 2, **dadurch gekennzeichnet, dass** ein erstes insbesondere mehrteiliges Lichtauskoppelmittel (302b-1, 302b-2, 302b-3) sich entlang eines ersten Außenrands des Spitzenprofils (802) erstreckt wobei ein zweites insbesondere einteiliges Lichtauskoppelmittel (302b-4; 302b-5) sich entlang eines zweiten Außenrands des Spitzenprofils (802) erstreckt.

4. Hubladebühne (100) nach Anspruch 2 oder 3, **dadurch gekennzeichnet, dass** das Spitzenprofil (802) eine Ladekante (804) mit einer Öffnung (806) aufweist, wobei die Ladekante (804) im Bereich der Öffnung (806) auf beiden Seiten der Öffnung (806) Profilflächen (808) aufweist, die sich im Wesentlichen parallel zur Ladekante (804) erstrecken und gegeneinander um einen Winkel insbesondere zwischen 25° und 35° vorzugsweise von 30° oder bezüglich einer optischen Achse (810) um einen Winkel (α, β) insbesondere zwischen 20° und - 20° vorzugsweise von +15° oder -15° geneigt sind.

5. Hubladebühne (100) nach Anspruch 4, **dadurch gekennzeichnet, dass** die Ladekante (804) bezüglich der optischen Achse (810) geneigte Profilflächen (814) aufweist, die die Öffnung (806) einschließen, wobei eine der Profilflächen (814) mit einem Winkel (γ) insbesondere zwischen 40° und 50° bevorzugt 45° bezüglich der optischen Achse (810) geneigt ist, wobei die anderen Profilfläche (814) mit einem Winkel (δ) insbesondere zwischen 75° und 85° vorzugsweise 80° bezüglich der optischen Achse (810) geneigt ist.

6. Verfahren zum Steuern einer Hubladebühne (100) nach einem der vorherigen Ansprüche, **dadurch gekennzeichnet, dass** wenigstens zwei an der Hubladebühne (100) angeordnete Leuchtmittel (302a, 302a') angesteuert werden (S2), insbesondere während wenigstens ein anderes an der Hubladebühne (100) angeordnetes Leuchtmittel (302a) blinkt, im Wesentlichen synchron miteinander oder abwechselnd zueinander zu blinken oder dauerhaft zu Leuchten.

7. Steuergerät (2000) zum Ausführen des Verfahrens nach Anspruch 6, **dadurch gekennzeichnet, dass** das Steuergerät (2000) ausgebildet ist, wenigstens zwei Leuchtmittel (302a, 302a') anzusteuern, insbesondere während wenigstens ein anderes Leuchtmittel (302a) blinkt, im Wesentlichen dazu und/oder zueinander synchron oder abwechselnd zu blinken oder dauerhaft zu Leuchten.

## Claims

1. Tail lift (100) comprising a platform (102), the tail lift (100) having a transverse outer edge, a groove (110) or an angle (402, 502) extending in the transverse direction in the transverse outer edge or in a tip profile (802) arranged on the transverse outer edge and extending along the transverse outer edge, or in an edge portion element extending along the transverse outer edge and arranged on a longitudinal outer edge of the platform (102), the groove (110) or the angle (402, 502) being open toward the outer side of the platform (102), a light decoupling means (302b), in particular rod-shaped, being arranged at least partially in the groove (110) or in the angle (402, 502) such that the light decoupling means (302b) extends in the transverse direction, light sources being provided which are configured to couple light into the light decoupling means (302b) in a flashing or continuous manner, **characterized in that** on both end faces of the light decoupling means (302b) one of the light sources (302a) is arranged for coupling light into the light decoupling means (302b), which light source is designed to couple light from the light source (302a) into the light decoupling means (302b) directed substantially in the transverse direction.

2. Tail lift (100) according to any of the preceding claims, **characterized in that** the groove (110) or the angle (402, 502) has a portion extending in the transverse direction with an inner profile, in particular an inner radius, which corresponds to the outer profile, in particular the outer radius of the light decoupling means (302b), **and/or characterized in that** the angle (402, 502) or the groove (110) is designed as an optical element for reflecting light exiting from the light decoupling means (302b), **and/or characterized in that** the groove (110) or the angle (402, 502) has a transverse profile perpendicular to the transverse direction, which profile defines a consistently uniform light emission angle in the transverse direction for light exiting from the light decoupling means (302b), **and/or characterized in that** the light decoupling means (302b) comprises scattering particles arranged in a light guiding element, in particular a plastic, a polymethyl methacrylate or quartz glass, **and/or characterized in that** the groove (110) or the angle (402, 502) and the light decoupling means (302b) extend at least partially along an outer edge of a tip profile (802) for the tail lift (100) or an outer edge of the platform (102).

3. Tail lift (100) according to claim 2,
**characterized in that** a first in particular multi-part light decoupling means (302b-1, 302b-2, 302b-3) extends along a first outer edge of the tip profile (802), a second, in particular single-part light decoupling means (302b-4; 302b-5) extending along a second outer edge of the tip profile (802).

4. Tail lift (100) according to claim 2 or 3,
**characterized in that** the tip profile (802) comprises a loading edge (804) having an opening (806), the loading edge (804) having profile surfaces (808) in the region of the opening (806) on both sides of the opening (806), which profile surfaces extend substantially in parallel with the loading edge (804) and are inclined relative to one another at an angle in particular between 25° and 35°, preferably of 30°, or with respect to an optical axis (810) at an angle (α, β) in particular between 20° and -20°, preferably of +15° or -15°.

5. Tail lift (100) according to claim 4,
**characterized in that** the loading edge (804) comprises profile surfaces (814) that are inclined with respect to the optical axis (810), which profile surfaces enclose the opening (806), one of the profile surfaces (814) being inclined at an angle (γ) in particular between 40° and 50°, preferably 45° with respect to the optical axis (810), the other profile surface (814) being inclined at an angle (δ) in particular between 75° and 85°, preferably 80° with respect to the optical axis (810).

6. Method for controlling a tail lift (100) according to any of the preceding claims, **characterized in that** at least two light sources (302a, 302a') arranged on the tail lift (100) are controlled (S2), in particular while at least one other light source (302a) arranged on the tail lift (100) is flashing, to flash substantially synchronously with each other or alternately with each other or to light continuously.

7. Control unit (2000) for carrying out the method according to claim 6, **characterized in that** the control unit (2000) is designed to control at least two light sources (302a, 302a'), in particular while at least one other light source (302a) is flashing, to flash substantially synchronously or alternately with it and/or with each other or to light continuously.

## Revendications

1. Plate-forme élévatrice (100) comportant une plate-forme (102), la plate-forme élévatrice (100) présentant un bord transversal extérieur, dans lequel ou dans un profil d'arête (802) disposé au niveau du bord transversal extérieur et s'étendant le long du bord transversal extérieur, ou dans un élément de section de bord disposé le long du bord transversal extérieur et en regard d'un bord longitudinal extérieur de la plate-forme (102), s'étend une rainure (110) ou un angle (402, 502) dans la direction transversale, la rainure (110) ou l'angle (402, 502) étant ouvert vers l'extérieur de la plate-forme (102), dans laquelle rainure (110) ou angle (402, 502) est disposé, au moins en partie, un élément d'extraction de lumière (302b) notamment de forme allongée, de sorte que l'élément d'extraction de lumière (302b) s'étend dans la direction transversale, des sources lumineuses étant prévues et configurées pour injecter de la lumière de façon clignotante ou en émission continue dans l'élément d'extraction de lumière (302b), **caractérisée en ce que**, sur chacune des deux faces d'extrémité de l'élément d'extraction de lumière (302b), est disposée respectivement l'une des sources lumineuses (302a) pour injecter de la lumière dans l'élément d'extraction de lumière (302b), ladite source étant conçue pour diriger essentiellement la lumière émise par la source lumineuse (302a) dans la direction transversale et l'injecter dans l'élément d'extraction de lumière (302b).

2. Plate-forme élévatrice (100) selon l'une quelconque des revendications précédentes, **caractérisée en ce que** la rainure (110) ou l'angle (402, 502) présente une section s'étendant dans la direction transversale avec un profil intérieur, notamment un rayon intérieur, qui correspond au profil extérieur, notamment au rayon extérieur, de l'élément d'extraction de lumière (302b), et/ou **caractérisée en ce que** l'angle (402, 502) ou la rainure (110) est conçu comme élément optique pour réfléchir la lumière sortant de l'élément d'extraction de lumière (302b), et/ou **caractérisée en ce que** la rainure (110) ou l'angle (402, 502) présente, perpendiculairement à la direction transversale, un profil transversal qui, dans la direction transversale, fixe un angle de sortie de lumière uniforme pour la lumière sortant de l'élément d'extraction de lumière (302b), et/ou **caractérisée en ce que** l'élément d'extraction de lumière (302b) comporte des particules diffusantes disposées dans un élément guide-lumière, notamment un matériau plastique, du polyméthacrylate de méthyle ou du verre de quartz, et/ou **caractérisée en ce que** la rainure (110) ou l'angle (402, 502) ainsi que l'élément d'extraction de lumière (302b) s'étendent au moins en partie le long d'un bord extérieur d'un profil d'arête (802) pour la plate-forme élévatrice (100) ou le long d'un bord extérieur de la plate-forme (102).

3. Plate-forme élévatrice (100) selon la revendication 2, **caractérisée en ce qu'**un premier élément d'extraction de lumière, notamment multipartite (302b-l, 302b-2, 302b-3), s'étend le long d'un premier bord extérieur du profil d'arête (802), tandis qu'un second élément d'extraction de lumière, notamment monobloc (302b-4 ; 302b-5), s'étend le long d'un second bord extérieur du profil d'arête (802).

4. Plate-forme élévatrice (100) selon la revendication 2 ou 3, **caractérisée en ce que** le profil d'arête (802) présente un bord de chargement (804) avec une ouverture (806), le bord de chargement (804) présentant, dans la zone de l'ouverture (806), de part et d'autre de l'ouverture (806), des faces de profil (808) qui s'étendent essentiellement parallèlement au bord de chargement (804) et sont inclinées l'une par rapport à l'autre d'un angle notamment compris entre 25° et 35°, de préférence 30°, ou par rapport à un axe optique (810) d'un angle (α, β) notamment compris entre -20° et +20°, de préférence +15° ou -15°.

5. Plate-forme élévatrice (100) selon la revendication 4, **caractérisée en ce que** le bord de chargement (804) présente des faces de profil (814) inclinées par rapport à l'axe optique (810) qui incluent l'ouverture (806), l'une des faces de profil (814) étant inclinée par rapport à l'axe optique (810) d'un angle (Y) notamment compris entre 40° et 50°, de préférence 45°, tandis que l'autre face de profil (814) est inclinée par rapport à l'axe optique (810) d'un angle (δ) notamment compris entre 75° et 85°, de préférence 80°.

6. Procédé pour commander une plate-forme élévatrice (100) selon l'une quelconque des revendications précédentes, **caractérisé en ce que** au moins deux sources lumineuses (302a, 302a') disposées sur la plate-forme élévatrice (100) sont commandées (S2), notamment tandis qu'au moins une autre source lumineuse (302a) disposée sur la plate-forme élévatrice (100) clignote, pour clignoter essentiellement de manière synchrone entre elles ou alternativement les unes par rapport aux autres, ou pour rester allumées en permanence.

7. Dispositif de commande (2000) pour exécuter le procédé selon la revendication 6, **caractérisé en ce que** le dispositif de commande (2000) est conçu pour commander au moins deux sources lumineuses (302a, 302a'), notamment tandis qu'au moins une autre source lumineuse (302a) clignote, essentiellement pour faire clignoter ces sources de manière synchrone et/ou alternativement les unes par rapport aux autres, ou pour les maintenir allumées en permanence.
